(19) Europäisches Patentamt
European Patent Office
Office européen des brevets

(11) EP 3 343 671 A1

(12) # EUROPEAN PATENT APPLICATION
published in accordance with Art. 153(4) EPC

(43) Date of publication:
**04.07.2018 Bulletin 2018/27**

(21) Application number: **16838844.5**

(22) Date of filing: **25.04.2016**

(51) Int Cl.:
***H01M 2/16*** *(2006.01)* ***H01M 2/18*** *(2006.01)*
***H01M 10/12*** *(2006.01)*

(86) International application number:
**PCT/JP2016/062915**

(87) International publication number:
**WO 2017/033497 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.08.2015 JP 2015165110**

(71) Applicant: **Hitachi Chemical Co., Ltd.**
**Chiyoda-ku**
**Tokyo 100-6606 (JP)**

(72) Inventors:
- **ARAKI Shingo**
  **Tokyo 100-6606 (JP)**
- **UEDA Hiromasa**
  **Tokyo 100-6606 (JP)**
- **KITAMORI Shigetaka**
  **Tokyo 100-6606 (JP)**
- **OKOSHI Tetsuro**
  **Tokyo 100-6606 (JP)**
- **SHIBAHARA Toshio**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **LEAD STORAGE-BATTERY SEPARATOR, LEAD STORAGE-BATTERY, AND METHOD FOR PRODUCING SAME**

(57) A separator 30 for a lead storage battery, comprising a laminate sheet 60 including an elongated porous sheet 40, and a porous sheet 50 laminated on the porous sheet 40, and a positional deviation preventing portion 70 fixing the relative positions of the porous sheet 40 and the porous sheet 50, wherein at least one edge portion in the lateral direction of the porous sheet 40 on the side of the porous sheet 50 is exposed from the porous sheet 50.

***Fig.3***

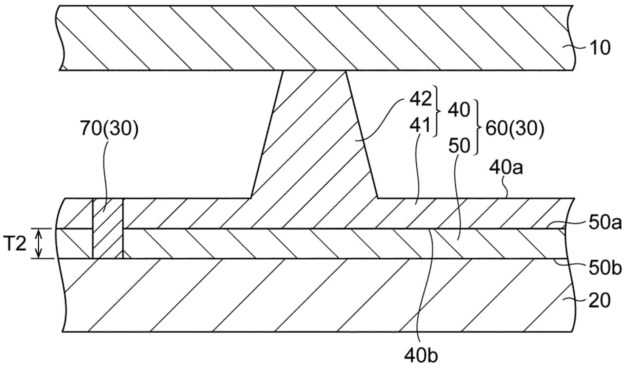




EP 3 343 671 A1

## Description

### Technical Field

The present invention relates to a separator for a lead storage battery, a lead storage battery, and methods for producing the same.

### Background Art

In recent years, in the automobile industry, development of an idling stop vehicle (hereinafter, referred to as "ISS vehicle") has been performed as a measures against regulation of carbon dioxide gas or for the purpose of low energy consumption. The ISS vehicle is a vehicle provided with a control function to reduce carbon dioxide gas emission by stopping the engine during a halt of the vehicle. In the ISS vehicle, compared to conventional vehicles, the amount of discharge is increased because supply of electricity to electric components (such as lights) is necessary during no idling, a large amount of current discharge is necessary when the engine is restarted, and the like.

Moreover, the amount of charge reduces because opportunities of charging reduce in the ISS vehicle. For this reason, the battery results in insufficient charge accompanied by the passage of the cycle, and therefore, the state of charge (hereinafter, referred to as "SOC") is reduced. In the cycle where insufficient charge is facilitated, stratification of the electrolyte solution readily occurs. The stratification of the electrolyte solution is a phenomenon that sulfate ions generated in an electrode plate during charge sink due to gravity to generate a difference in concentration of sulfate ions between the upper portion and the lower portion of the electrolyte solution, and the concentration is higher in the lower portion and is lower in the upper portion.

In the ISS cycle, the battery is not fully charged, and stirring of the electrolyte solution by the subsequent generation of gas barely occurs; therefore, the stratification of the electrolyte solution readily occurs. If the stratification occurs, the lower portion of the electrode plate is exposed to a high concentration of sulfuric acid; as a result, lead sulfate accumulates in the active material, readily resulting in an early end of life.

To block this stratification of an electrolyte solution, the Patent Literature 1 below discloses that a non-woven fabric is interposed between a bag-like separator and a negative electrode plate to prevent sinking of sulfate ions eluted from lead sulfate during charge for blocking the stratification of an electrolyte solution.

### Citation List

### Patent Literature

Patent Literature 1: Japanese Patent No. 5500315

### Summary of Invention

### Technical Problem

In addition to preventing stratification of the electrolyte solution, it is desired that the cycle properties (cycle life properties) is further improved in the lead storage battery compared to the conventional lead storage battery. When a laminate sheet obtained by laminating a plurality of sheets is used as a separator for a lead storage battery to produce a lead storage battery and the positional deviation of the constituent members in the lead storage battery is generated, a lead storage battery having excellent cycle properties may not be obtained in some cases because formation is not performed, or the like.

The present invention has been made in consideration of the circumstances, and an object of the present invention is to provide a separator for a lead storage battery which can produce a lead storage battery having excellent cycle properties while positional deviation of constituent members in the lead storage battery is reduced, and a method for producing the separator. Moreover, an object of the present invention is to provide a lead storage battery having excellent cycle properties, and a method for producing the lead storage battery.

### Solution to Problem

The separator for a lead storage battery of the present invention comprises a laminate sheet including an elongated first porous sheet and a second porous sheet laminated on the first porous sheet, and a positional deviation preventing portion fixing the relative positions of the first porous sheet and the second porous sheet, wherein at least one edge portion of the first porous sheet in the lateral direction of the first porous sheet on the side of the second porous

sheet is exposed from the second porous sheet.

By the way, in the technique disclosed in Patent Literature 1, there are cases where a negative electrode plate is difficult to insert into the bag-like separator because a non-woven fabric is folded during insertion of the negative electrode plate or where the positional deviation of the non-woven fabric and the like may occur at the bonding portion to cause bonding failure when the separator is folded and bonded to obtain a bag-like separator. If such bonding failure is generated, the battery performance such as cycle properties tends to reduce. In contrast, according to the separator for a lead storage battery of the present invention, because the positional deviation between the sheets is reduced by fixing the relative positions of the first porous sheet and the second porous sheet, a lead storage battery having excellent cycle properties can be obtained while the positional deviation of the constituent members in the lead storage battery is reduced. Namely, according to the separator for a lead storage battery of the present invention, a lead storage battery having excellent cycle properties can be obtained while the positional deviation of the constituent members in the lead storage battery, which is a problem generated mainly during production of the lead storage battery, is reduced. Moreover, according to the separator for a lead storage battery of the present invention, a lead storage battery having excellent cycle properties can be obtained with high productivity.

The positional deviation preventing portion may be a plurality of positional deviation preventing portions disposed along the longitudinal direction of the first porous sheet. The positional deviation preventing portion may be a thermally welded portion, an ultrasonically welded portion, an adhesive, a double-sided adhesive tape, or a pressure bonded portion.

The first porous sheet and the second porous sheet may be in abutment with each other. It is preferable that the average pore diameter of the second porous sheet is 1 to 200 μm. The second porous sheet may contain at least one selected from the group consisting of organic fibers, glass fibers, and pulp. It is preferable that at least one surface of the second porous sheet is hydrophilized. It is preferable that the edge portion of the first porous sheet has a portion having an amount of exposure of 2 to 9 mm in the lateral direction of the first porous sheet.

It is preferable that at least one surface of the second porous sheet has at least one selected from the group consisting of a sulfone group, a carboxyl group, and a hydroxyl group. The separator for a lead storage battery of the present invention may be an aspect wherein the first porous sheet has a first rib and a second rib extending in the longitudinal direction of the first porous sheet, the second rib is a plurality of second ribs disposed at each of two ends of the first porous sheet in the lateral direction, and the first rib is disposed in a region between the two ends. It is preferable that the plurality of second ribs is 10 to 40 second ribs disposed at each of the two ends.

The separator for a lead storage battery of the present invention may be an aspect (negative electrode accommodating bag for a lead storage battery) wherein the laminate sheet is folded such that the second porous sheet is positioned inside the laminate sheet and the edge portions of the first porous sheet are bonded to each other to form a space which can accommodate an electrode.

The method for producing a separator for a lead storage battery of the present invention comprises a step of laminating the first porous sheet and the second porous sheet such that the edge portions of the first porous sheet are exposed from the second porous sheet, to obtain a separator.

A first embodiment of the lead storage battery of the present invention comprises the separator for a lead storage battery, a positive electrode, and a negative electrode accommodated in the space of the separator, wherein the negative electrode and the positive electrode are alternately disposed. Such a lead storage battery has excellent cycle properties and has high productivity.

A second embodiment of the lead storage battery of the present invention is a lead storage battery comprising an electrolytic cell, and an electrode group and an electrolyte solution accommodated in the electrolytic cell, wherein the electrode group includes a positive electrode and a negative electrode laminated with a separator interposed therebetween, the positive electrode includes a positive electrode current collector, and a positive electrode material supported on the positive electrode current collector, the negative electrode includes a negative electrode current collector, and a negative electrode material supported on the negative electrode current collector, the separator includes a first porous sheet, and a second porous sheet having an average pore diameter of 1 to 200 μm, and at least part of the second porous sheet is disposed between the negative electrode and the first porous sheet.

The lead storage battery of the second embodiment has excellent cycle properties because at least part of the second porous sheet having an average pore diameter of 1 to 200 μm is disposed between the negative electrode and the first porous sheet.

In the lead storage battery of the second embodiment, it is preferable that at least one surface of the second porous sheet has at least one selected from the group consisting of a sulfone group, a carboxyl group, and a hydroxyl group. The lead storage battery of the second embodiment may be an aspect wherein the first porous sheet is elongated, and has a first rib and a second rib extending in the longitudinal direction of the first porous sheet, the second rib is a plurality of second ribs disposed at each of two ends in the lateral direction of the first porous sheet, and the first rib is disposed in a region between the two ends. In the lead storage battery of the second embodiment, it is preferable that the plurality of second ribs is 10 to 40 second ribs disposed at each of the two ends.

The method for producing a lead storage battery of the present invention comprises a step of obtaining a lead

storage battery using the positive electrode, the negative electrode, and the separator.

## Advantageous Effects of Invention

According to the present invention, it is possible to provide a separator for a lead storage battery which can produce a lead storage battery having excellent cycle properties while positional deviation of the constituent members in the lead storage battery is reduced, and a method for producing the separator. Moreover, according to the present invention, it is possible to provide a lead storage battery having excellent cycle properties and a method for producing the lead storage battery. Furthermore, according to the present invention, excellent cycle properties and other excellent battery performances (such as charge acceptance performance) can be compatible. Moreover, according to the present invention, it is possible to provide a lead storage battery having an extremely small reduction in charging capacity and sufficiently satisfactory in application to the ISS vehicles used in severe environments, and the method for producing the lead storage battery.

According to the present invention, it is possible to provide an application of the separator for a lead storage battery to the lead storage battery in micro hybrid cars. According to the present invention, it is possible to provide an application of the lead storage battery to micro hybrid cars. According to the present invention, it is possible to provide an application of the lead storage battery to ISS vehicles.

## Brief Description of Drawings

[Figure 1] Figure 1 is a sectional view illustrating one example of a laminate structure of a positive electrode, a negative electrode, and a separator.
[Figure 2] Figure 2 is a view illustrating one example of a porous sheet.
[Figure 3] Figure 3 is a sectional view illustrating one example of a laminate structure of a porous sheet and an electrode.
[Figure 4] Figure 4 is a view illustrating one example of the state where a negative electrode is accommodated in a bag-like separator.

## Description of Embodiments

Hereinafter, embodiments of the present invention will be described in detail. The specific gravity is defined as a specific gravity converted at 20°C in this specification because the specific gravity varies according to temperature. In this specification, the phrase "the present embodiment" encompasses a first embodiment and a second embodiment.

<Lead storage battery>

The lead storage battery of the present embodiment comprises an electrolytic cell, an electrode group, an electrolyte solution (sulfuric acid or the like), and a separator, for example. The electrode group and the electrolyte solution are accommodated in the electrolytic cell. The electrode group has a plurality of electrodes, and is an electrode plate group having a plurality of electrode plates (plate-like electrodes), for example. The electrode group includes a positive electrode (such as positive electrode plate) and a negative electrode (such as negative electrode plate) facing each other with the separator interposed therebetween. As the lead storage battery of the present embodiment, a liquid lead storage battery is preferred.

The positive electrode and the negative electrode are, for example, laminated with the separator interposed therebetween to form an electrode group (electrode plate group or the like). The positive electrode includes a current collector (positive electrode current collector), and a positive electrode material supported on the current collector. The negative electrode includes a current collector (negative electrode current collector), and a negative electrode material supported on the current collector. In the present embodiment, the positive electrode material and the negative electrode material are, for example, electrode materials after formation. If the electrode material is unformed, the electrode materials (unformed positive electrode material and unformed negative electrode material) contain raw materials of the electrode active materials (positive electrode active material and negative electrode active material), and the like. The current collectors each form a current conductive path of the electrode material. As a basic configuration of the lead storage battery, the same configuration as that in the conventional lead storage battery can be used.

The separator includes a first porous sheet and a second porous sheet. In the lead storage battery, at least part of the second porous sheet is, for example, disposed between the first porous sheet and the negative electrode. The second porous sheet is, for example, disposed on the negative electrode side against the first porous sheet. In the

present embodiment, a laminate sheet including the first porous sheet and the second porous sheet laminated on the first porous sheet can be used as a separator such that the surface of the separator facing the negative electrode is composed of the second porous sheet.

The separator for a lead storage battery of the first embodiment comprises a laminate sheet including an elongated first porous sheet and a second porous sheet laminated on the first porous sheet, and a positional deviation preventing portion fixing the relative positions of the first porous sheet and the second porous sheet. In the separator for a lead storage battery of the first embodiment, at least one edge portion of the first porous sheet in the lateral direction of the first porous sheet on the side of the second porous sheet is exposed from the second porous sheet. Namely, the edge portions of the first porous sheet are projected from the second porous sheet in the lateral direction of the first porous sheet, and a bag-like separator can be obtained by bonding such projected portions thus projected to each other.

The amount of the first porous sheet exposed in the lateral direction at the edge portion of the first porous sheet (amount of exposure from the second porous sheet. The distance from the end of the first porous sheet to the end of the second porous sheet in the lateral direction of the first porous sheet) is preferably within the range below. The lower limit of the amount of exposure is preferably 2 mm or more, more preferably 4 mm or more, still more preferably 5 mm or more from the viewpoint of easy bonding of the first porous sheets to each other when the first porous sheet is formed into the form of a bag, sufficient strength of the bonding portion, and high productivity. Although the upper limit of the amount of exposure is not particularly limited, from the viewpoint of practical use, the upper limit is preferably 20 mm or less, more preferably 15 mm or less, still more preferably 10 mm or less. The upper limit of the amount of exposure is particularly preferably 9 mm or less from the viewpoint of readily obtaining a stratification reducing effect. From these viewpoints, the amount of exposure is preferably 2 to 20 mm, more preferably 2 to 15 mm, still more preferably 2 to 10 mm, particularly preferably 2 to 9 mm, extremely preferably 4 to 9 mm, highly preferably 5 to 9 mm. It is preferable that the edge portion of the first porous sheet has a portion (exposed portion) having an amount of exposure satisfying the above range. All the edge portions may have the amount of exposure.

The separator for a lead storage battery of the first embodiment may be, for example, an aspect (electrode accommodating bag for a lead storage battery) wherein the laminate sheet is folded such that the second porous sheet is positioned inside the laminate sheet and the edge portions of the first porous sheet are bonded to each other to form a space which can accommodate an electrode (electrode accommodating space). In this case, the second porous sheet can be disposed between the electrode and the first porous sheet by disposing the electrode in the space. The electrode may be accommodated in the space in the state where the electrode is in abutment with the second porous sheet. For example, in the electrode accommodating bag, the inner surface of the second porous sheet forms the electrode accommodating space, and the outer surface of the second porous sheet is in abutment with the inner surface of the first porous sheet.

The first porous sheet may have a rib on one or both surfaces thereof. The rib extends in the longitudinal direction of the first porous sheet, for example. In an aspect, the first porous sheet may have a main rib (first rib) and a mini rib (second ribs) extending in the longitudinal direction of the first porous sheet, the mini rib may be a plurality of mini ribs disposed at each of two ends of the first porous sheet in the lateral direction, and the main rib may be disposed in a region between the two ends. In an aspect where the first porous sheet has a rib on one surface thereof, for example, the one surface may be positioned on the outer side of the electrode accommodating bag. The electrode accommodating bag is, for example, a negative electrode accommodating bag for a lead storage battery having a space which can accommodate the negative electrode.

The lead storage battery of the first embodiment is, for example, an aspect comprising the negative electrode accommodating bag for a lead storage battery, a positive electrode, and a negative electrode accommodated in the space of the negative electrode accommodating bag, wherein the negative electrode and the positive electrode are alternately disposed. The lead storage battery of the second embodiment is an aspect wherein the separator includes a first porous sheet, and a second porous sheet having an average pore diameter of 1 to 200 $\mu$m, and at least part of the second porous sheet is disposed between the negative electrode and the first porous sheet.

Under PSOC, the main components of the negative electrode active material are, for example, spongy lead (metal lead) which is barely charged and lead sulfate negatively charged. Accordingly, the negative electrode is mainly negatively charged. This means that, in the configuration of the battery, the solid phase of the negative electrode active material (including lead sulfate and the like) is potentially lower than the positive electrode, and is on a negative potential side. The battery voltage occurs as a total of a potential difference between the electrical double layer regions of the positive electrode and the negative electrode. The electrical double layer region is a thin layer region on the order of angstrom. The battery voltage of the lead storage battery is equal to the difference between the potential of the positive electrode side and the potential of the negative electrode side for the potential difference between the electrical double layer regions of the positive electrode and the negative electrode. The solid phase of the positive electrode active material has an electrical double layer structure positively charged (namely, high potential to the electrolyte solution). In contrast, the solid phase of the negative electrode active material has an electrical double layer structure negatively charged (namely, low potential to the electrolyte solution).

The sulfate ion species ($SO_4^{2-}$, $HSO_4^-$, and the like) generated from lead sulfate and the like in a charging reaction are heavier than water in the electrolyte solution and have a nature to readily settle out due to gravity. Because the battery is not fully charged under PSOC, the stirring of the electrolyte solution by generation of gas is difficult to be performed. As a result, unevenness of the concentration of the electrolyte solution called "stratification" where the specific gravity of the electrolyte solution in the battery lower portion is increased and the specific gravity of the electrolyte solution in the battery upper portion is reduced occurs. If such a phenomenon occurs, the reaction area reduces, and therefore, the charge acceptance performance and the discharge performance are reduced.

As described above, the solid phase of the negative electrode active material has an electrical double layer structure negatively charged; for this reason, the sulfate ion species ($SO_4^{2-}$, $HSO_4^-$, and the like) generated on the negative electrode side have an electrostatically repulsive relation with the negative electrode. Because this electrostatically repulsive action is applied, the negative electrode side is in an environment in which the sulfate ion species ($SO_4^{2-}$, $HSO_4^-$, and the like) generated within the solid phase of the negative electrode active material (for example, pores of the negative electrode active material) through the charging reaction are pushed to the electrolyte solution side to accelerate the sedimentation of the sulfate ion species in the electrolyte solution.

In contrast, in the lead storage battery of the present embodiment, when at least part of the second porous sheet is disposed between the first porous sheet and the negative electrode (for example, when the second porous sheet is disposed between the first porous sheet and the negative electrode so as to abut on the surface of the negative electrode), the sulfate ion species pushed from the inside of the solid phase of the negative electrode active material to the electrolyte solution side are settled out in the electrolyte solution can be effectively prevented; for this reason, occurrence of stratification can be further prevented.

In contrast, because the solid phase of the positive electrode active material has an electrical double layer structure positively charged, sulfate ion species ($SO_4^{2-}$, $HSO_4^-$, and the like) generated on the positive electrode side have no electrostatically repulsive relation with the positive electrode. Accordingly, even if the porous sheet is disposed on the positive electrode side (for example, even if the porous sheet abuts on the surface of the positive electrode), the effect of avoiding the stratification of the electrolyte solution is small. This applies to both cases of a configuration in which a porous sheet is disposed on the positive electrode side on the outer side of the bag-like separator which accommodates the negative electrode (for example, a configuration in which the porous sheet is brought into abutment with the surface of the positive electrode) without the porous sheet being disposed on the negative electrode side (for example, without the porous sheet being brought into abutment with the surface of the negative electrode), and a configuration in which the porous sheet is disposed on the positive electrode side within the bag-like separator which accommodates the positive electrode (for example, a configuration in which the porous sheet is brought into abutment with the surface of the positive electrode).

The second porous sheet may abut on the negative electrode, or may abut on the entire main surface of the negative electrode (for example, an electrode plate surface of the negative electrode plate). In the present embodiment, a negative electrode accommodated in a bag-like first porous sheet may abut on the second porous sheet within the first porous sheet.

When the second porous sheet is brought into abutment with the surface of the negative electrode, it is preferable that the negative electrode is not integrated with the second porous sheet from the viewpoint of further preventing stratification. For example, when the negative electrode is integrated with the porous sheet, as a result of the negative electrode active material entering the gaps of the porous sheet, the porous sheet integrally abutting on the surface of the negative electrode may act as part of the solid phase of the negative electrode active material which generates sulfate ion species causing the stratification. In this case, an effect of preventing the stratification phenomenon by the porous sheet as part of the solid phase of the negative electrode active material tends to be small wherein the stratification phenomenon appears by sedimentation of the sulfate ion species generated inside the pores of the negative electrode active material and the like and pushed to the electrolyte solution side. Moreover, the porous sheet integrally abutting on the surface of the negative electrode may increase the internal resistance of the battery.

It is preferable that the separator is in the form of a bag wrapping at least one of the positive electrode and the negative electrode. For example, an aspect wherein one of the positive electrode and the negative electrode is accommodated in the bag-like separator, and is alternately laminated on the other of the positive electrode and the negative electrode is preferred. For example, when the bag-like separator is applied to the positive electrode, the positive electrode current collector may penetrate through the separator due to the elongation of the positive electrode current collector; for this reason, it is preferable that the negative electrode is accommodated in the bag-like separator (negative electrode accommodating bag).

The first porous sheet and the second porous sheet each can be folded in two at their folded portions. The first porous sheet and the second porous sheet each may have a configuration in which part of the surface of the porous sheet faces other part of the surface thereof by folding the porous sheet. Such a configuration may be, for example, a configuration obtained by folding the porous sheet such that the cross section of the porous sheet has a V-shape or U-shape. Figure 1 is a sectional view illustrating one example of a laminate structure of a positive electrode, a negative

electrode, and a separator. Note that, in Figure 1, the illustration of the positional deviation preventing portion in the first embodiment is omitted. In Figure 1, a positive electrode 10 and a negative electrode 20 are alternately laminated with a separator 30 interposed therebetween. The separator 30 comprises a laminate sheet 60 including a first porous sheet 40 and a second porous sheet 50. The bag-like separator 30 which accommodates the negative electrode 20 can be obtained, for example, by obtaining an elongated laminate sheet 60 through lamination of the first porous sheet 40 and the second porous sheet 50, then disposing the negative electrode in a space formed by folding the laminate sheet 60 in the longitudinal direction at the center of the longitudinal direction, and further bonding the sheets at two lateral portions adjacent to the folding portion.

The configuration in which part of the surface of the porous sheet faces other part of the surface by folding the porous sheet is advantageous over the porous sheet individually disposed on both surfaces of the negative electrode because no positional deviation of the negative electrode and the porous sheet is generated.

Moreover, in the liquid lead storage battery, the electrode tends to be arranged such that the main surface (such as an electrode plate surface) of the electrode (such as an electrode plate) extends in the vertical direction. For this reason, when the length of the electrode is increased, the length tends to be increased in the vertical direction. Under PSOC, lead sulfate readily accumulates on the negative electrode, and particularly, is more likely to remain at the lower portion in the vertical direction of the negative electrode. Lead sulfate causes a volume dilation 2.7 times that by spongy lead which is the negative electrode active material; for this reason, if lead sulfate accumulates at the lower portion in the vertical direction of the negative electrode, the lower portion of the negative electrode readily elongates downward. In this case, the deformed lower portion of the negative electrode may break through the porous sheet, and this may cause short-circuit. In contrast, in the configuration in which part of the surface of the porous sheet faces other part of the surface by folding the porous sheet, the lower portion of the negative electrode tends to be positioned at the folded portion (bended portion) of the porous sheet having high strength; for this reason, the deformed lower portion of the negative electrode breaking through the porous sheet and causing short-circuit can be readily prevented.

Examples of the constituent material for the first porous sheet include resin materials such as polyolefin (such as polyethylene and polypropylene) and polyethylene terephthalate. The first porous sheet is a microporous sheet or the like, and has a porosity smaller than that of the second porous sheet, for example.

The constituent material for the second porous sheet is not particularly limited as long as it is a material having resistance against the electrolyte solution. Specific examples of the constituent material for second porous sheet include organic fibers, inorganic fibers (such as glass fibers), pulp, and inorganic oxide powders. The second porous sheet may contain at least one selected from the group consisting of organic fibers, glass fibers, and pulp. As the constituent material for second porous sheet, mixed fibers containing inorganic fibers and pulp may be used, or organic and inorganic mixed fibers containing organic fibers and inorganic fibers may be used. Examples of the organic fibers include polyolefin fibers (such as polyethylene fibers and polypropylene fibers) and polyethylene terephthalate fibers. As the second porous sheet, for example, a porous sheet containing the constituent material as the main component can be used. As the constituent material for second porous sheet, organic fibers are preferred from the viewpoint of preventing an increase in internal resistance of the battery.

When organic fibers are used as the constituent material for second porous sheet, the strength of the second porous sheet improves, and thus the processability improves. In contrast, when inorganic fibers (such as glass fibers) are used as the constituent material for second porous sheet, the wettability of the second porous sheet to the electrolyte solution and the retention ability of the electrolyte solution can be improved, and therefore, a reduction in charge acceptance performance is readily prevented. When pulp is used as the constituent material for second porous sheet, the density of the second porous sheet can be improved, and therefore, short-circuit resistant performance is further improved.

The second porous sheet may be a non-woven fabric. The non-woven fabric may appropriately contain inorganic oxide powder of silica or the like. The non-woven fabric can be produced by dispersing fibers in water and performing sheet making thereof; for this reason, a non-woven fabric containing inorganic oxide powder can be readily obtained by dispersing the inorganic oxide powder with fibers in water during sheet making.

It is preferable that the non-woven fabric is a mixed non-woven fabric containing glass fibers, pulp, and silica powder as main components. As such a non-woven fabric composed of a mixture of a plurality of fibers, for example, a thin separator disclosed in Japanese Unexamined Patent Publication No. 2002-260714 (separator applied to a control valve type lead storage battery. A separator not having a configuration composed of only glass fibers, and having a configuration containing glass fibers, acid-resistant organic resin fibers, and silica when necessary) can be suitably used.

It is preferable that at least one surface (main surface) of the second porous sheet is hydrophilized. By hydrophilizing the second porous sheet, the wettability of the electrolyte solution is improved, the electric resistance when the electrolyte solution contacts the separator is reduced, and the charge acceptance performance or efficiency discharge performance can be further improved. Both surfaces (main surface) of the second porous sheet may be hydrophilized, or only the surface (main surface) of the second porous sheet opposite to the first porous sheet may be hydrophilized.

As hydrophilization treatment, a plasma treatment, a sulfonation treatment, a surfactant treatment, a fluorine gas treatment, a corona discharge treatment, or the like can be used; the sulfonation treatment or the fluorine gas

treatment is preferred from the viewpoint of high ability of retaining the hydrophilicity. As the hydrophilization treatment, the fluorine gas treatment is more preferred from the viewpoint of shortening the time for the steps of the hydrophilization treatment.

A sulfone group can be introduced into the surface of the second porous sheet by the sulfonation treatment to improve the hydrophilicity. Examples of the fluorine gas treatment include a method of treating the second porous sheet with a mixed gas of fluorine gas and oxygen gas. By the fluorine gas treatment, at least one selected from the group consisting of a sulfone group, a carboxyl group, and a hydroxyl group can be introduced into at least one surface of the second porous sheet to improve the hydrophilicity. If at least one surface of the second porous sheet has at least one selected from the group consisting of a sulfone group, a carboxyl group, and a hydroxyl group, the hydrophilicity is improved, the electric resistance when the electrolyte solution contacts the separator is reduced, and the charge acceptance performance or the discharge properties can be further improved.

As the average pore diameter of the second porous sheet, a pore diameter enabling permeation of sulfate ions can be used. The average pore diameter of the second porous sheet is preferably within the range below from the viewpoint of readily preventing sedimentation of sulfate ions and imparting favorable influences to the battery reaction to further improve the charge acceptance performance and the cycle properties. The average pore diameter of the second porous sheet is preferably 1 μm or more, more preferably 2 μm or more, still more preferably 3 μm or more, particularly preferably 5 μm or more, extremely preferably 6 μm or more from the viewpoint of enabling sufficient permeation of sulfate ions and further improving the charge acceptance performance. The average pore diameter of the second porous sheet is preferably 200 μm or less, more preferably 150 μm or less, still more preferably 100 μm or less, particularly preferably 90 μm or less, extremely preferably 80 μm or less from the viewpoint of enabling a sufficient reduction in sedimentation of sulfate ions and further improving the cycle properties. From these viewpoints, the average pore diameter of the second porous sheet is preferably 1 to 200 μm, more preferably 1 to 150 μm, still more preferably 1 to 100 μm, particularly preferably 1 to 90 μm, extremely preferably 1 to 80 μm, highly preferably 2 to 80 μm, and still more preferably 3 to 80 μm, more preferably 5 to 80 μm, further preferably 6 to 80 μm. The average pore diameter of the second porous sheet may be 10 μm or more, or may be 30 μm or more. The average pore diameter of the second porous sheet may be 10 to 100 μm, or may be 30 to 90 μm.

Figure 2(a) is a front view illustrating one example of a first porous sheet, and Figure 2(b) is a sectional view illustrating one example of the first porous sheet. Figure 3 is a sectional view illustrating one example of a laminate structure of a first porous sheet, a second porous sheet, and electrodes. As illustrated in Figure 2, the first porous sheet 40 includes a flat plate-like base portion 41, a plurality of projected (for example, linear) ribs (main ribs) 42, and mini ribs 43. The base portion 41 supports the ribs 42 and mini ribs 43. The ribs 42 are disposed approximately parallel to each other on the one surface 40a of the porous sheet 40. The interval between the ribs 42 is 3 to 15 mm, for example. One end of the rib 42 in the height direction is integrated with and connected to the base portion 41, and the other end of the rib 42 in the height direction is in abutment with the positive electrode 10 (see Figure 3). The base portion 41 faces the positive electrode 10 in the height direction of the rib 42. The rib is not disposed on the other surface 40b of the porous sheet 40, and the other surface 40b of the porous sheet 40 is in abutment with the second porous sheet 50 (see Figure 3). The one surface 50a of the porous sheet 50 is in abutment with the porous sheet 40. The other surface 50b of the porous sheet 50 is in abutment with the negative electrode 20.

A lot of mini ribs 43 is formed at both sides in the width direction of the porous sheet 40 so as to extend in the longitudinal direction of the porous sheet 40. The mini rib 43 has a function to improve the strength of the separator to prevent the corner of the electrode from breaking through the separator to cause short-circuit when the lead storage battery vibrates in the traverse direction. It is preferable that the height, the width, and the interval of the mini rib 43 all are smaller than those of the rib 42. Moreover, the cross-sectional shape of the mini rib 43 may be the same as that of the rib 42, or may be different from that of the rib 42. It is preferable that the cross-sectional shape of the mini rib 43 is semi-circular. Moreover, the mini rib 43 does not need to be formed.

The number of mini ribs is preferably 10 or more, more preferably 20 or more from the viewpoint of preventing wrinkle in the end of the porous sheet 40 when the separator is wounded, and having high productivity, and the viewpoint of improving the strength. The number of mini ribs is preferably 40 or less from the viewpoint of readily forming the porous sheet 40 into the form of a bag. From these viewpoints, the number of mini ribs is preferably 10 to 40, more preferably 20 to 40. When the mini rib is disposed at two ends in the lateral direction of the porous sheet 40, the number of mini ribs is the number of mini ribs disposed at each of the two ends, for example.

As illustrated in Figure 3, the separator 30 in the first embodiment has a positional deviation preventing portion 70 which fixes the relative position between the porous sheet 40 and the porous sheet 50 in the laminate sheet 60. A positional deviation preventing means for forming the positional deviation preventing portion 70 is not particularly limited as long as it is a means which does not cause deviation in a relative position between the porous sheet 40 and the porous sheet 50. As the positional deviation preventing means, specifically, thermal welding, ultrasonic welding, an adhesive, a double-sided adhesive tape, press bonding, or the like can be used. As the positional deviation preventing portion 70, specifically, a thermally welded portion, an ultrasonically welded portion, an adhesive, a double-sided adhesive

tape, a pressure bonded portion, or the like can be used. The positional deviation preventing portion 70 may be formed inside the porous sheets 40 and 50, or may be formed on the outer sides of the porous sheets 40 and 50 separately from the porous sheets 40 and 50. The positional deviation preventing portion 70 in Figure 3 is a thermally welded portion, for example. As the positional deviation preventing portion 70, a thermally welded portion or an ultrasonically welded portion is preferred from the viewpoint of the higher productivity and economic efficiency.

When thermal welding is used as the positional deviation preventing means, the positional deviation of the porous sheet 40 and the porous sheet 50 can be prevented without changing the total thickness of the porous sheet 40 and the porous sheet 50. Thereby, a risk of generating failure when the electrode is inserted into the electrode accommodating bag during assembly of the battery can be further reduced, for example. Moreover, the production of the battery is easy. Note that, because melting is needed when thermal welding is performed, it is preferable that organic fibers are used as the constituent material for the porous sheet. The range of thermal welding temperature is preferably 150 to 300°C considering the melting point of the constituent material for the porous sheet (such as polyethylene, polypropylene, and polyethylene terephthalate).

When ultrasonic welding is used as the positional deviation preventing means, friction between the ultrasonic vibrator and the porous sheets 40 and 50 is reduced compared to thermal fusion; for this reason, even if organic fibers or pulp is used as the constituent material for the porous sheet 50, the positional deviation of the porous sheet 40 and the porous sheet 50 can be readily prevented without changing the total thickness of the porous sheet 40 and the porous sheet 50.

When an adhesive or a double-sided adhesive tape is used as the positional deviation preventing means, not only organic fibers but also glass fibers which are difficult to weld can be used as the constituent material for the porous sheet. Particularly, when an adhesive is used, the adhesion of the porous sheet 40 and the porous sheet 50 is highly ensured. It is preferable that the adhesive has acid resistance. Examples of the components contained in the adhesive include atactic polypropylene, isotactic polypropylene, polyethylene, and polypropylene.

When press bonding is used as the positional deviation preventing means, large stress is applied to the porous sheet during press bonding; for this reason, it is preferable that the tensile strength of the porous sheet is high. For this reason, when a material having high tensile strength (such as organic fibers or pulp) is used as a constituent material for the porous sheet, the positional deviation of the porous sheet 40 and the porous sheet 50 can be readily prevented.

The width of the positional deviation preventing portion in the lateral direction of the porous sheet 40 (such as a welding width of thermal welding, a welding width of ultrasonic welding, a width of an adhesive, or a width of press bonding) is preferably 0.3 mm or more, more preferably 0.4 mm or more from the viewpoint of readily obtaining high strength (such as welding strength or adhesion strength). The width of the positional deviation preventing portion in the lateral direction of the porous sheet 40 is preferably 2.0 mm or less, more preferably 1.6 mm or less, still more preferably 1.5 mm or less, particularly preferably 1.4 mm or less, extremely preferably 1.0 mm or less, highly preferably 0.7 mm or less from the viewpoint of further improving the battery performance. The width of the positional deviation preventing portion can be calculated as the average of the widths when any three points of the positional deviation preventing portion are observed with an optical microscope, a scanning electron microscope or the like, for example.

The configuration of the positional deviation preventing portion is not particularly limited. The positional deviation preventing portion can be disposed at any position. Examples of the shape of the positional deviation preventing portion include dot shapes and shapes of flat plates. The number of positional deviation preventing portions may be one, or may be plural. When a plurality of positional deviation preventing portions is disposed, a plurality of positional deviation preventing portions may be disposed along the longitudinal direction of the first porous sheet.

It is preferable that the positional deviation preventing portion is disposed between the ribs from the viewpoint of barely changing the total thickness of the separator.

The distance from the end of the first porous sheet (end of the long side) to the end of the positional deviation preventing portion in the lateral direction of the first porous sheet is preferably 35 mm or less, more preferably 33 mm or less, still more preferably 28 mm or less, particularly preferably 23 mm or less from the viewpoint of barely bending the second porous sheet and barely generating failure. The distance from the end of the first porous sheet (end of the long side) to the end of the positional deviation preventing portion in the lateral direction of the first porous sheet is preferably 4 mm or more, more preferably 5 mm or more from the viewpoint of readily bonding the first porous sheets to each other when the first porous sheet is formed into the form of a bag, a bonding portion having sufficient strength, and barely generating failure derived from the positional deviation preventing portion. When a plurality of positional deviation preventing portions is disposed, it is preferable that, among the distances of a plurality of positional deviation preventing portions, the shortest distance (minimum distance) satisfies the range.

It is preferable that the distance from the end of the first porous sheet (end of the long side) to the end of the positional deviation preventing portion in the lateral direction of the first porous sheet is larger than the amount of exposure in lateral direction of the first porous sheet from the viewpoint of readily producing the separator.

Figure 4 is a view illustrating one example of the state where the negative electrode 20 is accommodated in the bag-like separator 30. As illustrated in Figure 2(a) described above, the porous sheet used in production of the

separator 30 is formed into the form of an elongated sheet, for example. In the separator 30, the porous sheet is cut into an appropriate length and folded into two in the longitudinal direction of the porous sheet; the negative electrode 20 is disposed therein so as to be layered, and two lateral portions are mechanically sealed, press bonded, or thermally welded (for example, reference numeral 32 in Figure 4 indicates a mechanically sealed portion). Thereby, the separator 30 illustrated in Figure 4 is obtained. The bonding portion for forming the porous sheet into the form of a bag (such as mechanically sealed portion in Figure 4) may be the positional deviation preventing portion, and the bonding portion may be different from the positional deviation preventing portion. When the bonding portion is different from the positional deviation preventing portion, the bag-like separator is readily formed.

The upper limit of the thickness T1 of the base portion 41 is preferably 0.3 mm or less, more preferably 0.25 mm or less, still more preferably 0.2 mm or less from the viewpoint of further improving the charge acceptance performance and the discharge properties. Although the lower limit of the thickness T1 of the base portion 41 is not particularly limited, the lower limit is preferably 0.05 mm or more, more preferably 0.1 mm or more from the viewpoint of readily preventing short-circuit.

The upper limit of the height H of the rib 42 (height in the direction of facing the base portion 41 and the positive electrode 10) is preferably 1.25 mm or less, more preferably 1.0 mm or less, still more preferably 0.75 mm or less from the viewpoint of obtaining higher charge acceptance performance. The lower limit of the height H of the rib 42 is preferably 0.3 mm or more, more preferably 0.4 mm or more, still more preferably 0.5 mm or more from the viewpoint of further preventing the oxidation degradation of the positive electrode.

The lower limit of the ratio H/T1 of the height H of the rib 42 to the thickness T1 of the base portion 41 is preferably 0.5 or more from the viewpoint of higher oxidation resistance of the separator. If the ratio H/T1 is 0.5 or more, a portion which does not contact the electrode (for example, the positive electrode) can be sufficiently ensured; for this reason, it is inferred that the oxidation resistance of the separator is improved. The lower limit of the ratio H/T1 is more preferably 1 or more, still more preferably 2 or more from the viewpoint of higher oxidation resistance of the separator and productivity.

The upper limit of the ratio H/T1 is preferably 6 or less from the viewpoint of high shape retention of the rib and the viewpoint of further preventing short-circuit. If the ratio H/T1 is 6 or less, it is inferred that short-circuit is further prevented because the distance between the positive electrode and the negative electrode is sufficient. Moreover, if the ratio H/T1 is 6 or less, it is inferred that, without breaking the rib when the lead storage battery is assembled, the battery properties such as charge acceptance performance are more favorably kept. The upper limit of the ratio H/T1 is more preferably 5 or less, still more preferably 4.5 or less, particularly preferably 4 or less from the viewpoint of readily preventing short-circuit and the viewpoint of higher shape retention of the rib.

The upper base width B of the rib 42 (see Figure 2(b)) is preferably 0.1 to 2 mm, more preferably 0.2 to 1 mm, still more preferably 0.2 to 0.8 mm from the viewpoint of higher shape retention and oxidation resistance of the rib. The lower base width A of the rib is preferably 0.2 to 4 mm, more preferably 0.3 to 2 mm, still more preferably 0.4 to 1 mm from the viewpoint of high shape retention of the rib. The ratio (B/A) of the upper base width B to the lower base width A is preferably 0.1 to 1, more preferably 0.2 to 1, still more preferably 0.3 to 1 from the viewpoint of high shape retention of the rib.

The upper limit of the thickness T2 of the porous sheet 50 is preferably 0.3 mm or less, more preferably 0.2 mm or less, still more preferably 0.1 mm or less from the viewpoint of reducing the charge transfer resistance. The lower limit of the thickness T2 of the porous sheet 50 is preferably 0.05 mm or more from the viewpoint of further preventing the stratification. From these viewpoints, the thickness T2 is preferably 0.05 to 0.3 mm, more preferably 0.05 to 0.2 mm, still more preferably 0.05 to 0.1 mm.

The lower limit of the ratio T1/T2 of the thickness T1 of the base portion 41 to the thickness T2 of the porous sheet 50 is preferably 0.3 or more, more preferably 0.4 or more, still more preferably 0.5 or more from the viewpoint of reducing the charge transfer resistance and the viewpoint of further preventing the stratification. The upper limit of the ratio T1/T2 is preferably 5 or less, more preferably 4 or less, still more preferably 3 or less from the viewpoint of reducing the charge transfer resistance and the viewpoint of further preventing the stratification.

The lower limit of the total thickness of the separator 30 (total of the thickness of the porous sheet 40 and the thickness of the porous sheet 50 (total of the thickness of the base portion 41 and the thickness of the rib 42)) is preferably 0.6 mm or more, more preferably 0.7 mm or more, still more preferably 0.8 mm or more from the viewpoint of further preventing the permeation short circuit and the stratification. The upper limit of the total thickness of the separator 30 is preferably 1.5 mm or less, more preferably 1.2 mm or less, still more preferably 1.0 mm or less from the viewpoint of reducing the charge transfer resistance.

The present embodiment will not be limited to the aspect wherein the negative electrode is accommodated in a bag-like separator composed of a laminate sheet of a first porous sheet (porous sheet 40) and a second porous sheet (porous sheet 50); for example, a negative electrode and a leaf-like (not in the form of a bag) second porous sheet may be accommodated in a bag-like separator composed of a first porous sheet. Moreover, when the second porous sheet is disposed on the outer side of the bag-like separator, an aspect is possible wherein the positive electrode is accommodated in the bag-like separator composed of a first porous sheet. Moreover, at least part of the second porous sheet may be disposed between the first porous sheet and the negative electrode, or the entire second porous sheet may be disposed between the first porous sheet and the negative electrode.

The method for producing the separator for a lead storage battery of the present embodiment comprises a lamination step of laminating the first porous sheet and the second porous sheet such that an edge portion of the first porous sheet (porous sheet 40) is exposed from the second porous sheet (porous sheet 50), to obtain a separator. The method for producing the separator for a lead storage battery of the present embodiment may be an aspect further comprising a step of forming a positional deviation preventing portion (such as a thermally welded portion, an ultrasonically welded portion, or a pressure bonded portion) after the lamination step. The method for producing the separator for a lead storage battery of the present embodiment may be an aspect comprising a lamination step of laminating the first porous sheet and the second porous sheet with a positional deviation preventing portion (such as an adhesive or a double-sided adhesive tape) interposed therebetween.

(Positive electrode material)

[Positive electrode active material]

The positive electrode material contains a positive electrode active material. The positive electrode active material can be obtained by ageing and drying a positive electrode material paste containing a raw material for a positive electrode active material to obtain an unformed active material, and then performing a formation. It is preferable that the positive electrode active material after the formation contains α-lead dioxide (α-$PbO_2$), and may further contain β-lead dioxide (β-$PbO_2$). The raw material for the positive electrode active material is not particularly limited, and examples thereof include lead powder. Examples of the lead powder include lead powders produced by a ball mill type lead powder producing machine or a Barton pot type lead powder producing machine (in the ball mill type lead powder producing machine, a mixture of a powder of a main component PbO and a scale-like metal lead). As a raw material for the positive electrode active material, red lead oxide ($Pb_3O_4$) may be used. It is preferable that the unformed positive electrode material contains an unformed positive electrode active material containing tribasic lead sulfate, as a main component.

The average particle diameter of the positive electrode active material is preferably 0.3 μm or more, more preferably 0.5 μm or more, still more preferably 0.7 μm or more from the viewpoint of further improving the charge acceptance performance and the cycle properties. The average particle diameter of the positive electrode active material is preferably 2.5 μm or less, more preferably 2 μm or less, still more preferably 1.5 μm or less from the viewpoint of further improving the cycle properties. The average particle diameter of the positive electrode active material is the average particle diameter of the positive electrode active material in the positive electrode material after the formation. The average particle diameter of the positive electrode active material can be obtained, for example, as a numeric value obtained by arithmetic averaging of the values of the long side lengths (maximum particle diameters) of all the particles within an image taken with a scanning electron microscope photograph (1000x) in the range measuring a length of 10 μm × a width of 10 μm in the central portion of the positive electrode material after the formation.

[Positive electrode additives]

The positive electrode material may further contain additives. Examples of the additives include carbon materials, and short fibers for reinforcement (excluding carbon fibers). Examples of the carbon materials include carbonaceous conductive materials. Examples of the carbonaceous conductive materials include graphite, carbon black, activated carbon, carbon fibers, and carbon nanotubes. Examples of carbon black include furnace black (such as ketjen black), channel black, acetylene black, and thermal black. As the carbonaceous conductive materials, the same materials as those for the negative electrode additives can be used. Examples of the short fibers for reinforcement include acrylic fibers, polyethylene fibers, polypropylene fibers, and polyethylene terephthalate fibers.

[Physical properties of positive electrode material]

The lower limit of the specific surface area of the positive electrode material is preferably 3 $m^2/g$ or more, more preferably 4 $m^2/g$ or more, still more preferably 5 $m^2/g$ or more from the viewpoint of higher charge acceptance performance. Although the upper limit of the specific surface area of the positive electrode material is not particularly limited, the upper limit is preferably 15 $m^2/g$ or less, more preferably 13 $m^2/g$ or less, still more preferably 12 $m^2/g$ or less from the viewpoint of practical use and the viewpoint of high usage rate. The specific surface area of positive electrode material is the specific surface area of the positive electrode material after the formation. The specific surface area of the positive electrode material can be adjusted, for example, by a method of adjusting the amounts of sulfuric acid and water to be added when the positive electrode material paste is prepared, a method of pulverizing the active material at the stage

of the unformed active material, or a method of varying the formation conditions.

The specific surface area of the positive electrode material can be measured by a BET method, for example. The BET method is a method of adsorbing an inert gas (for example, nitrogen gas) whose molecule has a known size onto the surface of the sample for measurement, and determining the surface area from the amount of adsorption and the occupied area of the inert gas in the surface, and is a standard measurement method of the specific surface area. Specifically, the measurement is performed based on the BET expressions below.

The relational expression of the expression (1) below is well established at $P/P_o$ in the range of 0.05 to 0.35. In the expression (1), symbols represent:

- P: adsorption equilibrium pressure in the state of adsorption equilibrium at a constant temperature
- $P_o$: saturated vapor pressure at the adsorption temperature
- V: the amount of adsorption at the adsorption equilibrium pressure P
- $V_m$: single molecular layer adsorption amount (amount of adsorption when the gas molecule forms a single molecular layer on the solid surface)
- C: BET constant (parameter concerning the interaction between the solid surface and the adsorption substance)

[Expression 1]

$$\frac{P}{V(P_0 - P)} = \left(\frac{C-1}{V_m C}\right)\left(\frac{P}{P_0}\right) + \frac{1}{V_m C} \quad \cdots (1)$$

By transforming the expression (1) (by dividing the numerator and the denominator on the left side by P), the expression (2) below is obtained. In the specific surface area meter used in the measurement, the gas molecule having a known adsorption area is adsorbed onto the sample, and the relation between the amount of adsorption (V) and the relative pressure ($P/P_o$) is measured. From the measured V and $P/P_o$, the left side of the expression (2) and $P/P_o$ are plotted. Here, if the gradient is s, the expression (3) below is introduced by the expression (2). If the intercept is i, the intercept i and the gradient s are as expressed by the expression (4) below and the expression (5) below, respectively.
[Expression 2]

$$\frac{1}{V\left(\frac{P_0}{P} - 1\right)} = \left(\frac{C-1}{V_m C}\right)\left(\frac{P}{P_0}\right) + \frac{1}{V_m C} \quad \cdots (2)$$

[Expression 3]

$$s = \frac{C-1}{V_m C} = \frac{C}{V_m C} - \frac{1}{V_m C} = \frac{1}{V_m} - \frac{1}{V_m C} \quad \cdots (3)$$

[Expression 4]

$$i = \frac{1}{V_m C} \quad \cdots (4)$$

[Expression 5]

$$s = \frac{1}{V_m} - i \quad \cdots (5)$$

By transforming the expression (4) and the expression (5), the expression (6) and expression (7) below are obtained, respectively, and the expression (8) below for determining the single molecular layer adsorption amount $V_m$ is obtained. Namely, if the amount of adsorption V at a relative pressure $P/P_o$ is measured at several points, and the gradient of the plot and the intercept are determined, the single molecular layer adsorption amount $V_m$ is determined.

[Expression 6]

$$s \times V_m = 1 - i \times V_m \qquad \cdots (6)$$

[Expression 7]

$$(s + i)V_m = 1 \qquad \cdots (7)$$

[Expression 8]

$$V_m = \frac{1}{s + i} \qquad \cdots (8)$$

The total surface area $S_{total}$ ($m^2$) of the sample is determined from the expression (9) below, and the specific surface area S ($m^2/g$) is determined from the total surface area $S_{total}$ with the expression (10) below. In the expression (9), N represents the Avogadro number, $A_{CS}$ represents the adsorption cross-sectional area ($m^2$), and M represents the molecular weight. Moreover, in the expression (10), w represents the amount of sample (g).
[Expression 9]

$$S_{total} = (V_m \times N \times A_{CS})M \qquad \cdots (9)$$

[Expression 10]

$$S = \frac{S_{total}}{w} \qquad \cdots (10)$$

The porosity of the positive electrode material is preferably 50% by volume or more, more preferably 55% by volume or more from the viewpoint of increasing the region where sulfuric acid enters the pores of the positive electrode material to readily increase the volume. Although the upper limit of the porosity of the positive electrode material is not particularly limited, the upper limit is preferably 70% by volume or less from the viewpoint of having an appropriate amount of sulfuric acid impregnated into the pores of the positive electrode material and favorably keeping the bonding force between the active materials. The upper limit of the porosity is more preferably 60% by volume or less from the viewpoint of practical use. The porosity of the positive electrode material is the porosity of the positive electrode material after the formation. The porosity of the positive electrode material is a value (volume-based proportion) obtained from the measurement with a mercury porosimeter, for example. The porosity of the positive electrode material can be adjusted according to the amount of diluted sulfuric acid added when the positive electrode material paste is prepared, for example.

(Negative electrode material)

[Negative electrode active material]

The negative electrode active material can be obtained by ageing and drying a negative electrode material paste containing a raw material for a negative electrode active material to obtain an unformed active material, and then performing a formation. Examples of the negative electrode active material after the formation include spongy lead (Spongy lead). The spongy lead tends to react with sulfuric acid in the electrolyte solution to be gradually converted into lead sulfate ($PbSO_4$). Examples of the raw material for a negative electrode active material include lead powder. Examples of the lead powder include lead powders produced by a ball mill type lead powder producing machine or a Barton pot type lead powder producing machine (in the ball mill type lead powder producing machine, a mixture of a powder of a main component PbO and a scale-like metal lead). The unformed negative electrode active material is composed of basic lead sulfate, metal lead, and lower oxide, for example.
The average particle diameter of the negative electrode active material is preferably 0.3 μm or more, more preferably 0.5 μm or more, still more preferably 0.7 μm or more from the viewpoint of further improving the charge

acceptance performance and the cycle properties. The average particle diameter of the negative electrode active material is preferably 2.5 μm or less, more preferably 2 μm or less, still more preferably 1.5 μm or less from the viewpoint of further improving the cycle properties. The average particle diameter of negative electrode active material is the average particle diameter of the negative electrode active material in the negative electrode material after the formation. The average particle diameter of the negative electrode active material can be obtained, for example, as a numeric value obtained by arithmetic averaging of the values of the long side lengths (maximum particle diameters) of all the particles within an image taken with a scanning electron microscope photograph (1000x) in the range measuring a length of 10 μm × a width of 10 μm in the central portion of negative electrode material after the formation.

[Negative electrode additives]

The negative electrode material may further contain additives. Examples of the additives include organic compounds; barium sulfate; carbon materials; and short fibers for reinforcement (excluding carbon fibers). As the short fibers for reinforcement, the same materials as those for the positive electrode additives can be used. Examples of the organic compound include resins having at least one selected from the group consisting of sulfone groups (a sulfonate group; a sulfo group) and sulfonate groups (such as groups obtained by replacing a hydrogen atom of a sulfone group with an alkali metal) (resins having a sulfone group and/or a sulfonate group). If the negative electrode material contains a resin having at least one selected from the group consisting of sulfone groups and sulfonate groups, the coarsening of the negative electrode active material accompanied by charge and discharge can be readily prevented, and the charge acceptance performance can be further improved.

Examples of the resins having a sulfone group and/or a sulfonate group include bisphenol based resins, ligninsulfonic acid, and ligninsulfonate. The ligninsulfonic acid is a compound obtained by partially sulfonating a decomposed product of lignin. Examples of ligninsulfonate include potassium ligninsulfonate and sodium ligninsulfonate. Among these, bisphenol based resins are preferred from the viewpoint of further improving the charge acceptance performance.

It is preferable that the bisphenol based resin is a resin obtained by reacting a bisphenol based compound with at least one selected from the group consisting of amino acids, amino acid derivatives, aminoalkylsulfonic acids, aminoalkylsulfonic acid derivatives, aminoary sulfonic acids, and aminoarylsulfonic acid derivatives, and at least one selected from the group consisting of formaldehyde and formaldehyde derivatives. Because the bisphenol based resin has a sulfone group and/or a sulfonate group, at least one compound used in the reaction has a sulfone group and/or a sulfonate group.

The bisphenol based compound is a compound having two hydroxyphenyl groups. Examples of the bisphenol based compound include 2,2-bis(4-hydroxyphenyl)propane (hereinafter, referred to as "bisphenol A"), bis(4-hydroxyphenyl)methane, 1,1-bis(4-hydroxyphenyl)ethane, 2,2-bis(4-hydroxyphenyl)hexafluoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis(4-hydroxyphenyl)-3,3,5-trimethylcyclohexane, and bis(4-hydroxyphenyl)sulfone (hereinafter, referred to as "bisphenol S").

Examples of the amino acids include glycine, alanine, phenylalanine, aspartic acid, and glutamic acid. Examples of the amino acid derivatives include alkali metal salts obtained by replacing a hydrogen atom in the carboxyl group of the amino acids with an alkali metal (for example, sodium or potassium). Examples of the aminoalkylsulfonic acids include aminomethanesulfonic acid, 2-aminoethanesulfonic acid, 3-aminopropanesulfonic acid, and 2-methylaminoethanesulfonic acid. Examples of the aminoalkylsulfonic acid derivatives include compounds obtained by replacing a hydrogen atom of aminoalkylsulfonic acids with an alkyl group (for example, an alkyl group having 1 to 5 carbon atoms) or the like, and alkali metal salts obtained by replacing a hydrogen atom in a sulfone group ($-SO_3H$) of aminoalkylsulfonic acids with alkali metals (for example, sodium or potassium). Examples of the aminoarylsulfonic acids include aminobenzenesulfonic acid (such as 4-aminobenzenesulfonic acid) and aminonaphthalenesulfonic acid. Examples of the aminoarylsulfonic acid derivatives include compounds obtained by replacing a hydrogen atom of aminoarylsulfonic acids with an alkyl group (for example, an alkyl group having 1 to 5 carbon atoms) or the like, and alkali metal salts obtained by replacing a hydrogen atom in a sulfone group ($-SO_3H$) of aminoarylsulfonic acids with alkali metals (for example, sodium or potassium).

Examples of formaldehyde derivatives include paraformaldehyde, hexamethylenetetramine, and trioxane.

It is preferable that the bisphenol based resin has at least one selected from the group consisting of a structural unit represented by the following formula (I) and a structural unit represented by the following formula (II).

[Chemical formula 1]

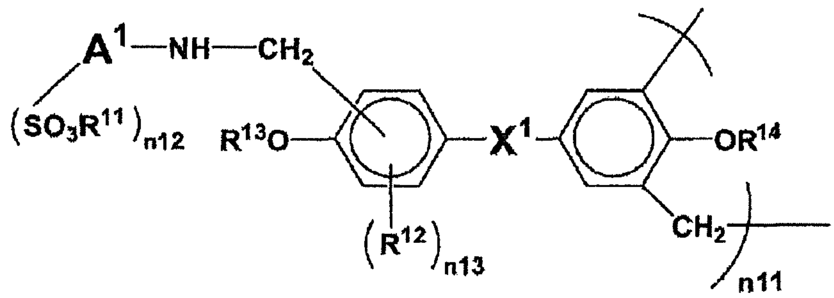

...(I)

[In formula (I), $X^1$ represents a divalent group, $A^1$ represents an alkylene group having 1 to 4 carbon atoms or an arylene group, $R^{11}$ represents an alkali metal or a hydrogen atom, $R^{10}$ represents a methylol group ($-CH_2OH$), $R^{13}$ and $R^{14}$ each independently represent an alkali metal or a hydrogen atom, n11 represents an integer of 1 to 600, n12 represents an integer of 1 to 3, and n13 represents 0 or 1.]

[Chemical formula 2]

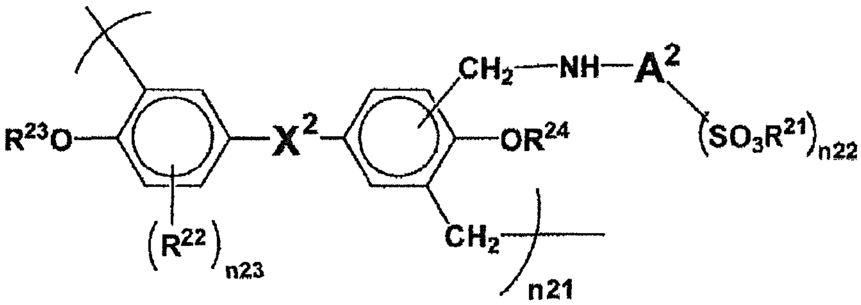

...(II)

[In formula (II), $X^2$ represents a divalent group, $A^2$ represents an alkylene group having 1 to 4 carbon atoms or an arylene group, $R^{21}$ represents an alkali metal or a hydrogen atom, $R^{22}$ represents a methylol group ($-CH_2OH$), $R^{23}$ and $R^{24}$ each independently represent an alkali metal or a hydrogen atom, n21 represents an integer of 1 to 600, n22 represents an integer of 1 to 3, and n23 represents 0 or 1.]

The proportion of the structural unit represented by formula (I) and the structural unit represented by formula (II) is not particularly limited, and can be varied according to the synthetic condition and the like. As the bisphenol based resin, a resin having only one of the structural unit represented by formula (I) and the structural unit represented by formula (II) may be used.

Examples of $X^1$ and $X^2$ include organic groups such as an alkylidene group (such as a methylidene group, an ethylidene group, an isopropylidene group, and a sec-butylidene group), a cycloalkylidene group (such as cyclohexylidene group), a phenylalkylidene group (such as a diphenyl methylidene group and a phenylethylidene group); and a sulfonyl group; the isopropylidene group ($-C(CH_3)_2-$) group is preferred from the viewpoint of higher charge acceptance performance; the sulfonyl group ($-SO_2-$) is preferred from the viewpoint of higher discharge properties. $X^1$ and $X^2$ may be replaced with a halogen atom such as a fluorine atom. When $X^1$ and $X^2$ are cycloalkylidene groups, the hydrocarbon ring may be replaced with an alkyl group or the like.

Examples of $A^1$ and $A^2$ include alkylene group having 1 to 4 carbon atoms such as a methylene group, an ethylene group, a propylene group, and a butylene group; and divalent arylene groups such as a phenylene group and a naphthylene group. The arylene group may be replaced with an alkyl group or the like.

Examples of the alkali metals for $R^{11}$, $R^{13}$, $R^{14}$, $R^{21}$, $R^{23}$, and $R^{24}$ include sodium and potassium. From the viewpoint of higher cycle properties and solubility to the solvent, n11 and n21 are preferably 5 to 300. From the viewpoint of improving the charge acceptance performance, the discharge properties, and the cycle properties in a good balance, n12 and n22 are preferably 1 or 2, more preferably 1. Although n13 and n23 are varied according to the production conditions, n13 and n23 are preferably 0 from the viewpoint of higher cycle properties and high storage stability of the bisphenol based resin.

The weight average molecular weight of the resin having a sulfone group and/or a sulfonate group (such as a bisphenol based resin) is preferably 3000 or more, more preferably 10000 or more, still more preferably 20000 or more, particularly preferably 30000 or more from the viewpoint of preventing elution of the resin having a sulfone group and/or a sulfonate group from the electrode to the electrolyte solution in the lead storage battery to facilitate an improvement

in cycle properties. The weight average molecular weight of the resin having a sulfone group and/or a sulfonate group is preferably 200000 or less, more preferably 150000 or less, still more preferably 100000 or less from the viewpoint of reducing the adsorption to the electrode active material to prevent a reduction in dispersibility and facilitate an improvement in cycle properties.

The weight average molecular weight of the resin having a sulfone group and/or a sulfonate group can be measured by, for example, gel permeation chromatography (hereinafter, referred to as "GPC") on the following conditions.

{GPC condition}

apparatus: high performance liquid chromatograph LC-2200 Plus (manufactured by JASCO Corporation)

pump: PU-2080
differential refractive index meter: RI-2031
detector: ultraviolet-visible absorption spectrometer UV-2075 ($\lambda$: 254 nm)
column oven: CO-2065

columns: TSKgel SuperAW (4000), TSKgel SuperAW (3000), TSKgel SuperAW (2500) (manufactured by Tosoh Corporation)
column temperature: 40°C
eluent: methanol solution containing LiBr (10 mmol/L) and triethylamine (200 mmol/L)
flow rate: 0.6 mL/min
molecular weight standard samples: polyethylene glycol (molecular weights: $1.10 \times 10^6$, $5.80 \times 10^5$, $2.55 \times 10^5$, $1.46 \times 10^5$, $1.01 \times 10^5$, $4.49 \times 10^4$, $2.70 \times 10^4$, $2.10 \times 10^4$; manufactured by Tosoh Corporation), diethylene glycol (molecular weight: $1.06 \times 10^2$; manufactured by KISHIDA CHEMICAL Co., Ltd.), dibutylhydroxytoluene (molecular weight: $2.20 \times 10^2$; manufactured by KISHIDA CHEMICAL Co., Ltd.)

Examples of the carbon materials include carbonaceous conductive materials. As the carbonaceous conductive materials, the same materials as those for the positive electrode additives can be used. As the carbonaceous conductive materials, at least one selected from the group consisting of graphite, carbon black, activated carbon, carbon fibers, and carbon nanotubes is preferred, graphite is more preferred, and scale-like graphite is still more preferred. The compounding amount of the carbonaceous conductive material is preferably 0.1 to 3 parts by mass relative to 100 parts by mass of the negative electrode active material (such as spongy metal lead) fully charged.

Here, "scale-like graphite" indicates graphite specified in JIS M 8601 (2005). The electrical resistivity of scale-like graphite is 0.02 $\Omega$·cm or less, and is smaller than the electrical resistivity of about 0.1 $\Omega$·cm of carbon black such as acetylene black by one order of magnitude. Accordingly, by using scale-like graphite instead of carbon black used in conventional lead storage batteries, the electric resistance of the negative electrode active material can be reduced, and therefore, the charge acceptance performance is further improved.

The average primary particle diameter of scale-like graphite is preferably 100 $\mu$m or more. The average primary particle diameter of scale-like graphite can be determined by a laser diffraction and scattering method specified in JIS M 8511(2005). For example, using a laser diffraction and scattering particle size distribution measurement apparatus (manufactured by NIKKISO CO., LTD.: microtrack 9220FRA), an appropriate amount of scale-like graphite is placed into an aqueous solution containing 0.5% by volume of a commercially available surfactant polyoxyethylene octylphenyl ether (for example, Triton X-100 manufactured by Roche Diagnostics GmbH); irradiation is performed with 40 W ultrasonic waves for 180 seconds while being stirred, and then the measurement is performed. The value of the determined average particle diameter (median diameter: D50) can be used as the average primary particle diameter.

The lead storage battery mounted on ISS vehicles, charge control cars, micro hybrid cars, and the like is used in a partially charged state called PSOC. In the lead storage battery used in such a circumstance, a phenomenon called "sulfation" that lead sulfate which is an insulator generated in the negative electrode active material during discharge is coarsened accompanied by the repetition of charge and discharge occurs at an early stage. If sulfation is generated, the charge acceptance performance and discharge performance of the negative electrode active material may be significantly reduced in some cases. In contrast, by using the negative electrode active material in combination with the carbonaceous conductive material, the coarsening of lead sulfate is readily prevented, and lead sulfate is readily kept in a fine state. Thereby, lead ions are readily eluted from lead sulfate; for this reason, high charge acceptance performance can be readily kept.

[Physical properties of negative electrode material]

The specific surface area of the negative electrode material is preferably 0.4 $m^2/g$ or more, more preferably 0.5 $m^2/g$ or more, still more preferably 0.6 $m^2/g$ or more from the viewpoint of increasing the reactivity of the electrolyte solution with the negative electrode active material. The specific surface area of the negative electrode material is preferably 2 $m^2/g$ or less, more preferably 1.8 $m^2/g$ or less, still more preferably 1.5 $m^2/g$ or less from the viewpoint of further preventing the contraction of the negative electrode during the cycle. The specific surface area of the negative electrode material is the specific surface area of the negative electrode material after the formation. The specific surface area of the negative electrode material can be adjusted by a method of adjusting the amounts of sulfuric acid and water to be added when the negative electrode material paste is prepared, a method of pulverizing the active material at the stage of the unformed active material, or a method of varying the formation conditions, for example. The specific surface area of the negative electrode material can be measured with a BET method, for example.

(Current collector)

Examples of the current collector include current collector grids such as casted grid products and expanded grid products. Examples of the material for a current collector include lead-calcium-tin alloys, lead-calcium alloys, and lead-antimony alloys. A slight amount of selenium, silver, bismuth, or the like can be added to these. For example, the current collector can be obtained by forming these materials into a grid by gravity casting, expanding, punching or the like. The current collector of the positive electrode and that of the negative electrode may be the same, or may be different.

<Method for producing lead storage battery>

The method for producing a lead storage battery of the present embodiment comprises an electrode production step of obtaining an electrode (positive electrode and negative electrode), and an assembling step of assembling constituent members containing the electrode to obtain a lead storage battery, for example. The assembling step is a step of obtaining a lead storage battery using a positive electrode, a negative electrode, and a separator, for example.

In the electrode production step, for example, electrode material pastes (positive electrode material paste and negative electrode material paste) are filled into the current collectors (for example, current collector grids such as a casted grid product or an expanded grid product), and are then aged and dried to obtain unformed electrodes. The positive electrode material paste contains, for example, a raw material for the positive electrode active material (such as lead powder), and may further contain other additives. The negative electrode material paste contains a raw material for a negative electrode active material (such as lead powder), preferably contains a resin having a sulfone group and/or a sulfonate group (such as a bisphenol based resin) as a dispersant, and may further contain other additives.

The positive electrode material paste for obtaining a positive electrode material can be obtained by, for example, the following method. In the production of the positive electrode material paste, red lead oxide ($Pb_3O_4$) may be used as a raw material for the positive electrode active material from the viewpoint of shortening the formation time.

First, a mixture is obtained by adding additives (such as short fibers for reinforcement) to the raw material for the positive electrode active material and performing a dry-mixing. A positive electrode material paste is obtained by adding sulfuric acid (such as diluted sulfuric acid) and a solvent (For example, water such as deionized water, or an organic solvent) to this mixture, and performing a kneading.

An unformed positive electrode can be obtained by filling this positive electrode material paste into the current collector (for example, a current collector grid such as a casted grid product or an expanded grid product), and then performing ageing and drying.

When short fibers for reinforcement are used in the positive electrode material paste, the compounding amount of the short fibers for reinforcement is preferably 0.005 to 0.3% by mass, more preferably 0.05 to 0.3% by mass on the basis of the total mass of the raw materials for the positive electrode active material (such as lead powder).

As the ageing condition to obtain the unformed positive electrode, an atmosphere at a temperature of 35 to 85°C and a humidity of 50 to 98 RH% for 15 to 60 hours is preferred. As the drying condition, a temperature of 45 to 80°C and 15 to 30 hours are preferred.

The negative electrode material paste can be obtained by, for example, the following method. First, a mixture is obtained by adding additives (such as a resin having a sulfone group and/or a sulfonate group, short fibers for reinforcement, and barium sulfate) to a raw material for a negative electrode active material, and performing a dry-mixing. A negative electrode material paste is obtained by adding sulfuric acid (such as diluted sulfuric acid) and a solvent (For example, water such as deionized water, or an organic solvent) to this mixture, and performing a kneading. An unformed negative electrode can be obtained by filling this negative electrode material paste into a current collector (for example, a current collector grid such as a casted grid product or an expanded grid product), and then performing ageing and drying.

When an organic compound (a resin having a sulfone group and/or a sulfonate group, such as a bisphenol based resin), a carbon material, short fibers for reinforcement, or barium sulfate is used in the negative electrode material paste, the compounding amount of each components is preferably within the range below. The compounding amount of the organic compound (in the case of resin having a sulfone group and/or a sulfonate group, the compounding amount in terms of resin solid content) is preferably 0.01 to 2.0% by mass, more preferably 0.05 to 1.0% by mass, still more preferably 0.1 to 0.5% by mass, particularly preferably 0.1 to 0.3% by mass on the basis of the total mass of the raw materials for a negative electrode active material (such as lead powder). The compounding amount of the carbon material is preferably 0.1 to 3% by mass, more preferably 0.2 to 2.5% by mass on the basis of the total mass of the raw materials for a negative electrode active material (such as lead powder). The compounding amount of the short fibers for reinforcement is preferably 0.05 to 0.15% by mass on the basis of the total mass of the raw materials for a negative electrode active material (such as lead powder). The compounding amount of the barium sulfate is preferably 0.01 to 2.0% by mass, more preferably 0.01 to 1.0% by mass on the basis of the total mass of the raw materials for a negative electrode active material (such as lead powder).

As the ageing condition to obtain the unformed negative electrode, an atmosphere at a temperature of 45 to 65°C and a humidity of 70 to 98 RH% for 15 to 30 hours is preferred. As the drying condition, a temperature of 45 to 60°C and 15 to 30 hours are preferred.

In the assembling step, for example, the unformed negative electrode and the unformed positive electrode produced as above are alternately laminated with the separator interposed therebetween, and the current collecting units having the same polarity in the electrode are connected (such as welding) with a strap to obtain an electrode group. This electrode group is disposed within an electrolytic cell to produce an unformed battery. Next, an electrolyte solution is injected into the unformed battery, and DC current is then fed to perform electrolytic cell formation. The specific gravity of the electrolyte solution after the formation is adjusted to an appropriate specific gravity to obtain a lead storage battery.

The electrolyte solution contains sulfuric acid, for example. It is preferable that the electrolyte solution contains alkali metal ions from the viewpoint of higher life performance. As the alkali metal ions, at least one selected from the group consisting of lithium ion, sodium ion and potassium ion is preferred. Among these, sodium ion is more preferred from the viewpoint of further preventing permeation short circuit. The electrolyte solution containing alkali metal ions can be obtained by mixing a powder of sulfate such as lithium sulfate, sodium sulfate, or potassium sulfate with sulfuric acid. As a sulfate to be dissolved in the electrolyte solution, anhydride or hydrate can be used.

The specific gravity of the electrolyte solution after the formation is preferably within the range below. The specific gravity of the electrolyte solution is preferably 1.25 or more, more preferably 1.26 or more, still more preferably 1.27 or more, particularly preferably 1.275 or more from the viewpoint of preventing permeation short circuit or freezing and having higher discharge properties. The specific gravity of the electrolyte solution is preferably 1.33 or less, more preferably 1.32 or less, still more preferably 1.315 or less, particularly preferably 1.31 or less from the viewpoint of further improving the charge acceptance performance and the cycle properties. The value of the specific gravity of the electrolyte solution can be measured with a hydrometer-type densimeter, or a digital densimeter manufactured by Kyoto Electronics Manufacturing Co., Ltd., for example.

The concentration of the alkali metal ions when the electrolyte solution contains alkali metal ions is preferably 0.06 mol/L or more, more preferably 0.1 mol/L or more on the basis of the total amount of the electrolyte solution from the viewpoint of further improving the charge acceptance performance and the cycle properties. The concentration of the alkali metal ions in the electrolyte solution is preferably 0.14 mol/L or less on the basis of the total amount of the electrolyte solution from the viewpoint of further improving the charge acceptance performance and the cycle properties. The concentration of the alkali metal ions in the electrolyte solution can be measured by, for example, ICP spectroscopy (high frequency inductively coupled plasma spectroscopy).

Although the detail of the mechanism to improve the cycle properties when the concentration of the alkali metal ions in the electrolyte solution is within the above-mentioned predetermined range, it is inferred as follows. Namely, when the concentration of the alkali metal ions is within the above-mentioned predetermined range, it is considered that an alkali metal is readily precipitated in the separator (particularly, surface layer portion); precipitation of lead in the separator is readily prevented and the precipitate barely grows, and thus short-circuit (such as permeation short circuit) is readily prevented; for this reason, the cycle properties are improved.

The electrolytic cell is a member which can accommodate electrodes (such as electrode plates) therein. It is preferable that the electrolytic cell is a member including a box whose top surface is opened, and a lid which covers the top surface of this box, from the viewpoint of readily accommodating the electrodes. In the bonding of the box and the lid, an adhesive, thermal welding, laser welding, ultrasonic welding, or the like can be appropriately used. Although the shape of the electrolytic cell is not particularly limited, a rectangular shape is preferred to reduce wasted space during accommodation of the electrodes.

Although the material for the electrolytic cell is not particularly limited, it needs to be a material having resistance against the electrolyte solution (such as diluted sulfuric acid). Specific examples of the material for the electrolytic cell include PP (polypropylene), PE (polyethylene), and ABS resins. If the material is PP, the material is advantageous in

acid resistance, processability (ABS resin has difficulties in thermal welding of the electrolytic cell and the lid), and cost.

When the electrolytic cell includes a box and a lid, the material for the box and that for the lid may be the same material, or may be different materials. From the viewpoint of not generating excess stress, materials having an identical coefficient of thermal expansion are preferred.

The formation conditions and the specific gravity of sulfuric acid can be adjusted according to the properties of the electrode active material. Moreover, the formation treatment is performed not only after the assembling step; it may be performed also after the ageing and drying in the electrode production step (tank formation).

Examples

Hereinafter, the present invention will be specifically described by way of Examples. It should be noted that the present invention is not limited to only Examples below.

<Test A: evaluation of deviation of folding during production of accommodating bag for lead storage battery>

(Production of separator for lead storage battery)

[Example 1A]

An elongated sheet made of microporous polyethylene and having 8 ribs (rib interval: 9.8 mm, rib width (upper base width and lower base width): 0.8 mm, rib height: 0.55 mm) and mini ribs (rib interval: 1.0 mm, rib width (upper base width and lower base width): 0.3 mm, rib height: 0.2 mm) on one surface thereof (hereinafter, referred to as "sheet A", "microporous sheet" manufactured by Nippon Sheet Glass Company, Ltd., base portion width: 115 mm, base portion thickness: 0.20 mm), and a porous sheet made of polypropylene and having surfaces (both surfaces) hydrophilized with a sulfone group (hereinafter, referred to as "sheet B1", "non-woven fabric" manufactured by Japan Vilene Company, Ltd., width: 100 mm, thickness: 0.1 mm, average pore diameter: 1 μm, basis weight: 40 g/m$^2$) were prepared. The ribs and the mini ribs are disposed approximately parallel to each other in the lateral direction of the sheet A. Twenty mini ribs are disposed at each of two ends of the sheet A in the lateral direction. Next, the sheet A and the sheet B1 are layered such that the surface of the sheet A not having the ribs is in abutment with the sheet B1; a laminate sheet was thereby obtained. The laminate sheet was sandwiched with a heater at a setting temperature of 250°C.

The base portion width of the sheet A was 115 mm, the width of the sheet B1 was 100 mm, and the sheet B1 was disposed on the sheet A such that the sheet B1 was positioned approximately in the center of the sheet A. Namely, the sheet A and the sheet B1 were disposed such that two ends of the sheet A were each 7.5 mm projected from two ends of the sheet B1.

The average pore diameter was calculated as a value of a Median Pore Diameter (Volume) in the measurement results obtained by the measurement with a mercury porosimeter. The measurement conditions in the measurement with a mercury porosimeter are as follows:

- apparatus: manufactured by SHIMADZU Corporation, AutoPore IV 9500
- mercury intrusion pressure: 0.51 psia
- pressure retention time at measurement pressure: 10 seconds
- contact angle between a sample and mercury: 140°
- mercury surface tension: 485 dynes/cm
- mercury density: 13.5335 g/mL

The positions sandwiched with the heater were two positions of the sheet B1 in total located 20 mm from two ends of the long sides (distance (minimum distance) from an end of the sheet B1 to an end of the positional deviation preventing portion, a position of the sheet A located 27.5 mm from two ends of the long sides); portions with which the ribs of the sheet A did not interfere were selected. The ribs were disposed such that the longitudinal direction of each rib corresponded with the longitudinal direction of the sheet B1. After sandwiched with the heater, while the laminate sheet was being wound at a rate of 20 m/min, the sheet A and the sheet B1 were continuously fixed by partial thermal welding (positional deviation preventing means, width of the positional deviation preventing portion (width in the lateral direction of the sheet A. The same applies below): each 1.0 mm, welding temperature: 250°C) to obtain a separator for a lead storage battery. The area of a sheet of separator for a lead storage battery was 235 cm$^2$/sheet.

[Example 2A]

A sheet A and a sheet B1 were bonded with an adhesive (positional deviation preventing means) to obtain a

separator for a lead storage battery. The same sheets as those in Example 1A were used as the sheet A and the sheet B1. The constituent material of the adhesive was atactic polypropylene. The bonding position was the same as in Example 1A. The bonding area was 10 $cm^2$/sheet.

[Example 3A]

A sheet A and a sheet B1 were bonded with a double-sided adhesive tape (positional deviation preventing means) to obtain a separator for a lead storage battery. As the double-sided adhesive tape, a tape whose substrate was paper and pressure-sensitive adhesive was atactic polypropylene was used. The bonding position was the same as in Example 1A. As the double-sided adhesive tape, a double-sided adhesive tape for general work manufactured by ASKUL Corporation was used. The width of the double-sided adhesive tape was 10 mm.

[Example 4A]

A sheet A and a sheet B1 were bonded by press bonding (positional deviation preventing means) to obtain a separator for a lead storage battery. The press bonding was performed by sandwiching the sheet A and the sheet B1 with metal gears, and rotating the gears. The bonding position was the same as in Example 1A.

[Comparative Example 1]

Without using a positional deviation preventing means, the sheet A and a porous sheet having an average pore diameter of 40 $\mu$m (polypropylene non-woven fabric. Hereinafter, referred to as "sheet B2". Both surfaces subjected to a sulfonation treatment, width: 100 mm, thickness: 0.1 mm) were layered to obtain a separator for a lead storage battery.

[Example 5A]

A sheet A and a sheet B1 were welded by ultrasonic welding (positional deviation preventing means) to obtain a separator for a lead storage battery. The ultrasonic welding was performed on the following conditions. As the sheet A and the sheet B1, the same sheets as those in Example 1A were used. The disposed positions of the ultrasonically welded portions were the same as in Example 1A.

{Ultrasonic welding conditions}

(1) energy: 330 J
(2) output power: 30 W
(3) oscillating frequency: 39.5 kHz
(4) output amplitude: 80% (80% of the amplitude determined by the settings of the (1) to (3))
(5) distance between a horn and the welded portion: 0.15 mm

[Example 6A]

A separator for a lead storage battery was obtained in the same manner as in Example 1A except that, instead of the sheet B1, a porous sheet made of polypropylene having surfaces (both surfaces) subjected to a fluorine gas treatment (hereinafter, referred to as "sheet B3", "non-woven fabric" manufactured by Japan Vilene Company, Ltd., width: 100 mm, thickness: 0.1 mm, average pore diameter: 40 $\mu$m, basis weight: 40 g/$m^2$) was used. Because the surfaces of the sheet B3 are subjected to a fluorine gas treatment, those have a sulfone group, a carboxyl group, and a hydroxyl group. The same applies to the fluorine gas treatment below.

[Example 7A]

A separator for a lead storage battery was obtained in the same manner as in Example 2A except that, instead of the sheet B1, a non-woven fabric having surfaces (both surfaces) subjected to a fluorine gas treatment and composed of mixed fibers (porous sheet. Mixed fibers containing pulp, glass fibers, and silica powder. Hereinafter, referred to as "sheet B4", width: 100 mm, thickness: 0.1 mm, average pore diameter: 1 $\mu$m) was used.

[Example 8A]

A separator for a lead storage battery was obtained in the same manner as in Example 7A except that, instead of the sheet B4, a non-woven fabric of a sheet B4 having a width of 97 mm (hereinafter, referred to as "sheet B5") was used.

[Example 9A]

A separator for a lead storage battery was obtained in the same manner as in Example 7A except that, instead of the sheet B4, a non-woven fabric of a sheet B4 having a width of 111 mm (hereinafter, referred to as "sheet B6") was used.

[Example 10A]

A separator for a lead storage battery was obtained in the same manner as in Example 7A except that the forming position of the positional deviation preventing portion was changed to a position located 15.5 mm from the two ends of the long sides of the sheet B4 (position located 23 mm from the two ends of the long sides of the sheet A).

[Example 11A]

A separator for a lead storage battery was obtained in the same manner as in Example 7A except that, instead of the sheet B4, a non-woven fabric of a sheet B4 having a width of 113 mm (hereinafter, referred to as "sheet B7") was used.

[Example 12A]

A separator for a lead storage battery was obtained in the same manner as in Example 7A except that, instead of the sheet B4, a non-woven fabric of a sheet B4 having a width of 95 mm (hereinafter, referred to as "sheet B8") was used.

[Example 13A]

A separator for a lead storage battery was obtained in the same manner as in Example 2A except that, instead of the sheet B1, a porous sheet composed of glass fibers not subjected to a surface treatment (hereinafter, referred to as "sheet B9", width: 100 mm, thickness: 0.1 mm, average pore diameter: 1 μm) was used.

(Evaluation of positional deviation)

The presence/absence of the positional deviation in the sheet A and the sheets B1 to B9 was evaluated when a mechanical seal was formed on the separators for a lead storage battery (microporous sheet with a porous sheet) in Examples 1A to 13A and Comparative Example 1 with metal gears, as illustrated in Figure 4, to produce negative electrode accommodating bags for a lead storage battery. The non-woven fabric was adjusted so as to be positioned within the negative electrode accommodating bag. The number (n) of negative electrode accommodating bags for a lead storage battery to be prepared was 100 in each of Examples 1A to 13A and Comparative Example 1. The presence/absence of the positional deviation was visually determined. The results are shown in the following Table 1 and Table 2.

[Table 1]

| Items | | Example 1A | Example 2A | Example 3A | Example 4A | Comparative Example 1 |
|---|---|---|---|---|---|---|
| Non-woven fabric | Sheet name | Sheet B1 | Sheet B1 | Sheet B 1 | Sheet B1 | Sheet B2 |
| | Material | Organic fibers | | | | |
| | Hydrophilicization treatment | Sulfonation treatment | | | | |
| | Width (mm) | 100 | 100 | 100 | 100 | 100 |
| | Average pore diameter (μm) | 1 | 1 | 1 | 1 | 40 |

(continued)

| Items | Example 1A | Example 2A | Example 3A | Example 4A | Comparative Example 1 |
|---|---|---|---|---|---|
| Positional deviation preventing means | Thermal welding | Adhesive | Double-sided adhesive tape | Press bonding | None |
| The number n (bags) | 100 | 100 | 100 | 100 | 100 |
| The number of positional deviations (bags) | 0 | 0 | 0 | 0 | 23 |

[Table 2]

| Items | | Example 5A | Example 6A | Example 7A | Example 8A | Example 9A | Example 10A | Example 11A | Example 12A | Example 13A |
|---|---|---|---|---|---|---|---|---|---|---|
| Non-woven fabric | Sheet name | Sheet B1 | Sheet B3 | Sheet B4 | Sheet B5 | Sheet B6 | Sheet B4 | Sheet B7 | Sheet B8 | Sheet B9 |
| | Material | Organic fibers | | Mixed fibers | | | | | | Inorganic fiber |
| | Hydrophilicization treatment | Sulfonation treatment | Fluorine gas treatment | | | | | | | No treatment |
| | Width (mm) | 100 | 100 | 100 | 97 | 111 | 100 | 113 | 95 | 100 |
| | Average pore diameter (μm) | 1 | 1 | 1 | 1 | 1 | 1 | 1 | 1 | 1 |
| Positional deviation preventing means | | Ultrasonic welding | Thermal welding | Adhesive | | | | | | |
| Minimum distance from end of Sheet Ato end of non-woven fabric [amount of exposure] (mm) | | 7.5 | 7.5 | 7.5 | 9 | 2 | 7.5 | 1 | 10 | 7.5 |
| Minimum distance from end of Sheet A to end of positional deviation preventing portion (mm) | | 27.5 | 27.5 | 27.5 | 33 | 4 | 23 | 27.5 | 27.5 | 27.5 |
| Width of positional deviation preventing portion (mm) | | 1.0 | 1.0 | 1.0 | 1.0 | 1.0 | 1.0 | 1.0 | 1.0 | 1.0 |
| The number n (bags) | | 100 | 100 | 100 | 100 | 100 | 100 | 100 | 100 | 100 |
| The number of positional deviations (bags) | | 0 | 0 | 0 | 0 | 0 | 0 | 0 | 0 | 0 |

As apparent from Table 1 and Table 2, no positional deviations were generated in Examples 1A to 13A by using a positional deviation preventing means while 23% of positional deviation was generated in Comparative Example 1. It is considered that this is because positional deviation preventing means between the sheet A and the sheets B1 to B9 was not disposed.

<Test B: Evaluation of battery performance>

(Production of separator for lead storage battery)

[Example 1B]

A separator for a lead storage battery was obtained in the same manner as in Example 1A.

[Example 2B]

A separator for a lead storage battery was obtained in the same manner as in Example 1A except that the sheet B2 was used as a porous sheet.

[Example 3B]

A separator for a lead storage battery was obtained in the same manner as in Example 1A except that, as a porous sheet, a porous sheet having an average pore diameter of 80 μm (polypropylene non-woven fabric. Hereinafter, referred to as "sheet B10", both surfaces subjected to a sulfonation treatment, width: 100 mm, thickness: 0.1 mm) was used.

[Example 4B]

A separator for a lead storage battery was obtained in the same manner as in Example 1A except that, as a porous sheet, a porous sheet having an average pore diameter of 100 μm (polypropylene non-woven fabric. Hereinafter, referred to as "sheet B11". Both surfaces subjected to a sulfonation treatment, width: 100 mm, thickness: 0.1 mm) was used.

[Example 5B]

A separator for a lead storage battery was obtained in the same manner as in Example 1A except that, as a porous sheet, a porous sheet having an average pore diameter of 200 μm (polypropylene non-woven fabric. Hereinafter, referred to as "sheet B12". Both surfaces subjected to a sulfonation treatment, width: 100 mm, thickness: 0.1 mm) was used.

[Example 6B]

A negative electrode accommodating bag for a lead storage battery (bag-like double separator) without positional deviation in Comparative Example 1 was prepared.

[Example 7B]

A separator for a lead storage battery was obtained in the same manner as in Example 1A except that, as a porous sheet, a porous sheet having an average pore diameter of 40 μm (polypropylene non-woven fabric. Hereinafter, referred to as "sheet B13". Both surfaces subjected to a fluorine gas treatment, width: 100 mm, thickness: 0.1 mm) was used.

[Example 8B]

A separator for a lead storage battery was obtained in the same manner as in Example 8A.

[Example 9B]

A separator for a lead storage battery was obtained in the same manner as in Example 12A.

[Example 10B]

A separator for a lead storage battery was obtained in the same manner as in Example 7A.

[Example 11B]

A separator for a lead storage battery was obtained in the same manner as in Example 7A except that the width of the positional deviation preventing portion was changed to 0.4 mm.

[Example 12B]

A separator for a lead storage battery was obtained in the same manner as in Example 7A except that the width of the positional deviation preventing portion was changed to 1.5 mm.

[Example 13B]

A separator for a lead storage battery was obtained in the same manner as in Example 7A except that the width of the positional deviation preventing portion was changed to 1.6 mm.

[Example 14B]

A separator for a lead storage battery was obtained in the same manner as in Example 2A except that the sheet B9 was used as a porous sheet.

[Reference Example 1]

A negative electrode accommodating bag for a lead storage battery (bag-like double separator) having positional deviation in Comparative Example 1 was prepared.

(Production of lead storage battery)

[Production of positive electrode plate]

As raw materials for the positive electrode active material, lead powder and red lead oxide ($Pb_3O_4$) were used (lead powder: red lead oxide = 90:3.9 (mass ratio)). The raw materials for the positive electrode active material, 0.07% by mass of short fibers for reinforcement (acrylic fiber) on the basis of the total mass of the raw materials for the positive electrode active material, and water were mixed and then kneading was performed. Subsequently, kneading was performed while diluted sulfuric acid (specific gravity: 1.280) was being added little by little, to produce a positive electrode material paste. This positive electrode material paste was filled into an expanded current collector produced by performing expanding process on a milled sheet composed of a lead alloy. Then, the current collector filled with the positive electrode material paste was aged in an atmosphere at a temperature of 50°C and a humidity of 98% for 24 hours. Subsequently, drying was performed to produce an unformed positive electrode plate.

[Production of negative electrode plate]

As a raw material for a negative electrode active material, lead powder was used. A mixture containing 0.2% by mass (in terms of solid content) of Bispars P215 (condensate of a bisphenol based compound, aminobenzenesulfonic acid and formaldehyde, manufactured by Nippon Paper Industries Co., Ltd., trade name), 0.1% by mass of short fibers for reinforcement (acrylic fiber), 1.0% by mass of barium sulfate, and 2% by mass of carbon material (scale-like graphite (particle diameter: 180 μm)) was added to the lead powder, and a dry-mixing was then performed (the compounding amount is a compounding amount one the basis of the total mass of the raw material for a negative electrode active material). Next, water was added, and kneading was then performed. Subsequently, while diluted sulfuric acid (specific gravity: 1.280) was being added little by little, kneading was performed to produce a negative electrode material paste. This negative electrode material paste was filled into an expanded current collector produced by performing expanding process on a milled sheet composed of a lead alloy. Then, the current collector filled with the negative electrode material paste was aged in an atmosphere at a temperature of 50°C and a humidity of 98% for 24 hours. Subsequently, drying was performed to produce an unformed negative electrode plate.

[Assembly of battery]

The separators for a lead storage battery in Examples 1B to 5B and 7B to 14B were folded into a U-shaped cross-section in the longitudinal direction at the center of the longitudinal direction by forming a line of flection, and the unformed negative electrode plate was then disposed in the space having the U-shaped cross-section. The two lateral portions adjacent to the folded portion were each sealed by mechanical sealing to obtain a bag-like double separator (inner side: non-woven fabric, outer side: polyethylene separator). Adjustment was performed such that the non-woven fabric was positioned inside of the negative electrode accommodating bag. Subsequently, the unformed negative electrode plate was accommodated in the bag-like double separators in Examples 1B to 14B and Reference Example 1. Furthermore, six unformed negative electrode plates accommodated in the bag-like double separators and five unformed positive electrode plates were alternately laminated.

Subsequently, ear-parts of the electrode plates having the same polarity were welded by a cast on strap (COS) method to produce an electrode plate group. The electrode plate group was inserted into an electrolytic cell to assemble a 2 V single cell battery (corresponding to the B19 size single cell specified in JIS D 5301). Diluted sulfuric acid having a specific gravity of 1.210 in which sodium sulfate was dissolved such that concentration of sodium ion contained in the finished electrolyte solution (diluted sulfuric acid) after the formation was 0.1 mol/L was injected into this battery. Subsequently, the formation was performed in a 40°C water bath on a condition at a conducted current of 10 A for 20 hours to obtain a lead storage battery. The specific gravity of the electrolyte solution after the formation was 1.280 (in terms of 20°C). In Reference Example 1, the formation could not be performed, and the lead storage battery could not be obtained.

(Evaluation of battery performance)

In these lead storage batteries, the charge acceptance performance, the 5-hour rate capacity, the discharge properties, the stratification preventing effect, and the life cycle number were evaluated. The results are shown in the following Table 3 and Table 4. The methods for the measurements are shown below.

[Charge acceptance performance]

The SOC (state of charge) of the lead storage battery at an initial stage of the assembly was adjusted to 90% of a full charge in a thermostat at 25°C, and a charge current value at 5 seconds from the start of application of a charge voltage of 2.33 V (5-second charge current value) (note that the current before the voltage reached 2.33 V was limited to 100 A) was then measured. A higher 5-second charge current value means that the initial charge acceptance performance is higher. The charge acceptance performance was relatively evaluated where the result of measurement in Example 1B was 100.

[5-hour rate capacity]

The produced batteries were discharged at 25 °C and a constant current of 6 A, and a 5-hour rate capacity was calculated based on the discharge retention time until the cell voltage reduced to less than 1.75 V. The 5-hour rate capacity was relatively evaluated where the result of measurement in Example 1B was 100.

[Discharge properties]

As the discharge properties, discharge was performed at -15°C at a constant current of 5 C, and the discharge retention time until the battery voltage reached 1.0 V was measured. A longer discharge retention time is evaluated as a battery having higher discharge properties. The C indicates the relative current when the rated capacity is discharged from the full charge state at a constant current. For example, the current which can discharge the rated capacity for one hour is represented by "1 C", and the current which can discharge the rating capacity for two hour is represented by "0.5 C". The discharge properties were relatively evaluated where the result of measurement in Example 1B was 100.

[Stratification preventing effect and life cycle number]

A cycle test having one cycle of (i) discharge at a discharge current of 45 A for 59 seconds, (ii) discharge at a discharge current of 300 A for 1 second, and (iii) charge at a charge voltage of 2.33 V (limited current: 100 A) at a constant current and constant voltage while the lead storage battery was kept in an atmosphere at 25°C was repeated 3600 times (specification of Battery Association of Japan: SBAS0101). The specific gravity of the upper portion and that of the lower portion in the electrolyte solution at the 3600th time were measured, and the stratification preventing effect

was evaluated according to the difference between the specific gravities. A smaller numeric value means that the stratification can be more significantly prevented. Moreover, the cycle was continued, and the cycle number until the battery voltage reduced to 1.2 V was evaluated as the life cycle number.

[Table 3]

| Items | | Example 1B | Example 2B | Example 3B | Example 4B | Example 5B | Example 6B |
|---|---|---|---|---|---|---|---|
| Non-woven fabric | Sheet name | Sheet B1 | SheetB2 | Sheet B 10 | Sheet B11 | Sheet B12 | Sheet B2 |
| | Material | Organic fibers | | | | | |
| | Hydrophilicization treatment | Sulfonation treatment | | | | | |
| | Width (mm) | 100 | 100 | 100 | 100 | 100 | 100 |
| | Average pore diameter ($\mu$m) | 1 | 40 | 80 | 100 | 200 | 40 |
| Positional deviation preventing means | | Thermal welding | | | | | None |
| Width of positional deviation preventing portion (mm) | | 1.0 | 1.0 | 1.0 | 1.0 | 1.0 | - |
| Charge acceptance performance | | 100 | 106 | 107 | 109 | 111 | 106 |
| 5-hour rate capacity | | 100 | 103 | 103 | 104 | 104 | 103 |
| Discharge properties | | 100 | 106 | 107 | 109 | 110 | 106 |
| Stratification preventing effect | | 0.02 | 0.02 | 0.03 | 0.06 | 0.08 | 0.02 |
| The life cycle number | | 31000 | 32000 | 32000 | 19000 | 15000 | 32000 |

[Table 4]

| Items | | Example 7B | Example 8B | Example 9B | Example 10B | Example 11B | Example 12B | Example 13B | Example 14B |
|---|---|---|---|---|---|---|---|---|---|
| Non-woven fabric | Sheet name | Sheet B13 | Sheet B5 | Sheet B8 | Sheet B4 | Sheet B4 | Sheet B4 | Sheet B4 | Sheet B9 |
| | Material | Organic fibers | Mixed fibers | | | | | | Inorganic fibers |
| | Hydrophilicization treatment | Fluorine gas treatment | | | | | | | No treatment |
| | Width (mm) | 100 | 97 | 95 | 100 | 100 | 100 | 100 | 100 |
| | Average pore diameter (μm) | 40 | 1 | 1 | 1 | 1 | 1 | 1 | 1 |
| Positional deviation preventing means | | Thermal welding | Adhesive | | | | | | |
| Width of positional deviation preventing portion (mm) | | 1.0 | 1.0 | 1.0 | 1.0 | 0.4 | 1.5 | 1.6 | 1.0 |
| Charge acceptance performance | | 106 | 100 | 100 | 100 | 101 | 99 | 99 | 100 |
| 5-hour rate capacity | | 103 | 100 | 100 | 100 | 101 | 99 | 99 | 100 |
| Discharge properties | | 106 | 100 | 100 | 100 | 101 | 99 | 99 | 100 |
| Stratification preventing effect | | 0.02 | 0.03 | 0.06 | 0.02 | 0.02 | 0.03 | 0.06 | 0.02 |
| The life cycle number | | 32000 | 32000 | 19000 | 31000 | 32000 | 31000 | 19000 | 31000 |

Paying attention to the charge acceptance performance, it can be verified that a larger average pore diameter of the porous sheet more significantly improves the charge acceptance performance. It is considered that a large average pore diameter of the porous sheet barely inhibits the migration of sulfate ions. Paying attention to the stratification preventing effect, it can be verified that a smaller average pore diameter of the porous sheet more significantly improves the stratification preventing effect. It is considered that this is because a small average pore diameter of the porous sheet improves the performance for retaining sulfate ions. Paying attention to the life cycle number, it can be verified that a higher stratification preventing effect results in a larger life cycle number. Lead storage batteries were produced in the same manner as in Example 1B using the separators for a lead storage battery in Examples 2A to 6A, 9A to 11A, and 13A, and the life cycle number was then evaluated; the same result of evaluation as that in Example 1B was obtained.

Reference Signs List

10 ... positive electrode, 20 ... negative electrode, 30 ... separator (separator for a lead storage battery), 32 ... mechanical sealed portion, 40, 50 ... porous sheet, 40a, 50a ... one surface, 40b, 50b ... the other surface, 41 ... base portion, 42 ... rib, 43 ... mini rib, 60 ... laminate sheet, 70 ... positional deviation preventing portion, A ... lower base width of the rib, B ... upper base width of rib, H ... height of the rib, T1 ... thickness of the base portion, T2 ... thickness of the porous sheet.

## Claims

1. A separator for a lead storage battery, comprising:

   a laminate sheet including an elongated first porous sheet and a second porous sheet laminated on the first porous sheet; and
   a positional deviation preventing portion fixing relative positions of the first porous sheet and the second porous sheet,
   wherein at least one edge portion of the first porous sheet in a lateral direction of the first porous sheet on a side of the second porous sheet is exposed from the second porous sheet.

2. The separator for a lead storage battery according to claim 1, wherein the positional deviation preventing portion is a plurality of positional deviation preventing portions disposed along a longitudinal direction of the first porous sheet.

3. The separator for a lead storage battery according to claim 1 or 2, wherein the positional deviation preventing portion is a thermally welded portion, an ultrasonically welded portion, an adhesive, a double-sided adhesive tape, or a pressure bonded portion.

4. The separator for a lead storage battery according to any one of claims 1 to 3, wherein the first porous sheet and the second porous sheet are in abutment with each other.

5. The separator for a lead storage battery according to any one of claims 1 to 4, wherein an average pore diameter of the second porous sheet is 1 to 200 $\mu$m.

6. The separator for a lead storage battery according to any one of claims 1 to 5, wherein the second porous sheet contains at least one selected from the group consisting of organic fibers, glass fibers, and pulp.

7. The separator for a lead storage battery according to any one of claims 1 to 6, wherein at least one surface of the second porous sheet is hydrophilized.

8. The separator for a lead storage battery according to any one of claims 1 to 7, wherein the edge portion of the first porous sheet has a portion having an amount of exposure of 2 to 9 mm in the lateral direction of the first porous sheet.

9. The separator for a lead storage battery according to any one of claims 1 to 8, wherein at least one surface of the second porous sheet has at least one selected from the group consisting of a sulfone group, a carboxyl group, and a hydroxyl group.

10. The separator for a lead storage battery according to any one of claims 1 to 9,
    wherein the first porous sheet has a first rib and a second rib extending in the longitudinal direction of the first porous

sheet,
the second rib is a plurality of second ribs disposed at each of two ends of the first porous sheet in the lateral direction, and
the first rib is disposed in a region between the two ends.

**11.** The separator for a lead storage battery according to claim 10, wherein the plurality of second ribs is 10 to 40 second ribs disposed at each of the two ends.

**12.** The separator for a lead storage battery according to any one of claims 1 to 11, wherein the laminate sheet is folded such that the second porous sheet is positioned inside the laminate sheet and the edge portions of the first porous sheet are bonded to each other to form a space which can accommodate an electrode.

**13.** A method for producing the separator for a lead storage battery according to any one of claims 1 to 12, comprising: a step of laminating the first porous sheet and the second porous sheet such that the edge portions of the first porous sheet are exposed from the second porous sheet, to obtain a separator.

**14.** A lead storage battery, comprising:

the separator for a lead storage battery according to claim 12;
a positive electrode; and
a negative electrode accommodated in the space of the separator,
wherein the negative electrode and the positive electrode are alternately disposed.

**15.** A lead storage battery, comprising:

an electrolytic cell; and
an electrode group and an electrolyte solution accommodated in the electrolytic cell,
wherein the electrode group includes a positive electrode and a negative electrode laminated with a separator interposed therebetween,
the positive electrode includes a positive electrode current collector, and a positive electrode material supported on the positive electrode current collector,
the negative electrode includes a negative electrode current collector, and a negative electrode material supported on the negative electrode current collector,
the separator includes a first porous sheet, and a second porous sheet having an average pore diameter of 1 to 200 $\mu$m, and
at least part of the second porous sheet is disposed between the negative electrode and the first porous sheet.

**16.** The lead storage battery according to claim 15, wherein at least one surface of the second porous sheet has at least one selected from the group consisting of a sulfone group, a carboxyl group, and a hydroxyl group.

**17.** The lead storage battery according to claim 15 or 16,
wherein the first porous sheet is elongated, and has a first rib and a second rib extending in a longitudinal direction of the first porous sheet,
the second rib is a plurality of second ribs disposed at each of two ends in a lateral direction of the first porous sheet, and the first rib is disposed in a region between the two ends.

**18.** The lead storage battery according to claim 17, wherein the plurality of second ribs is 10 to 40 second ribs disposed at each of the two ends.

**19.** A method for producing a lead storage battery according to any one of claims 14 to 18, comprising:
a step of obtaining a lead storage battery using the positive electrode, the negative electrode, and the separator.

Fig.1

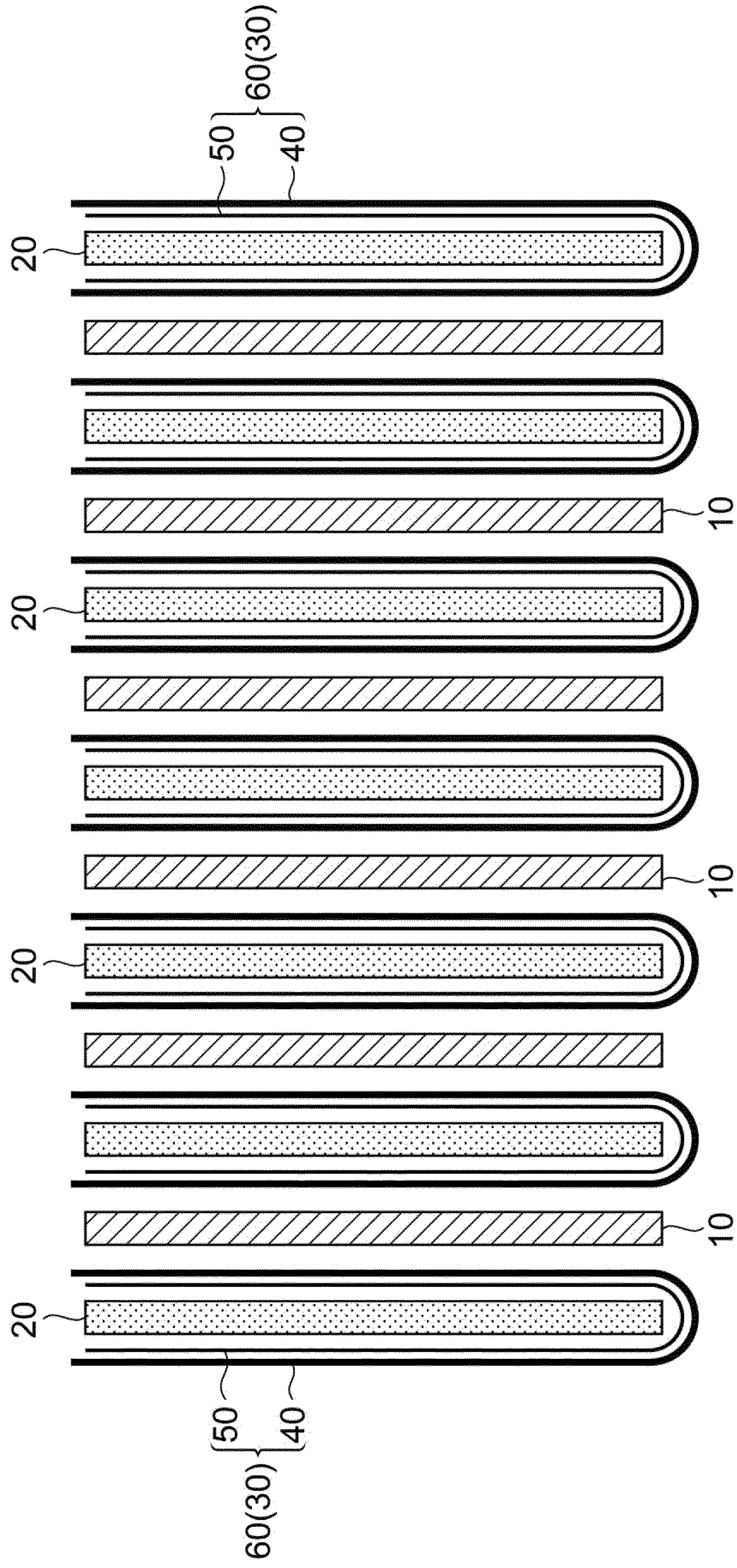

Fig.2

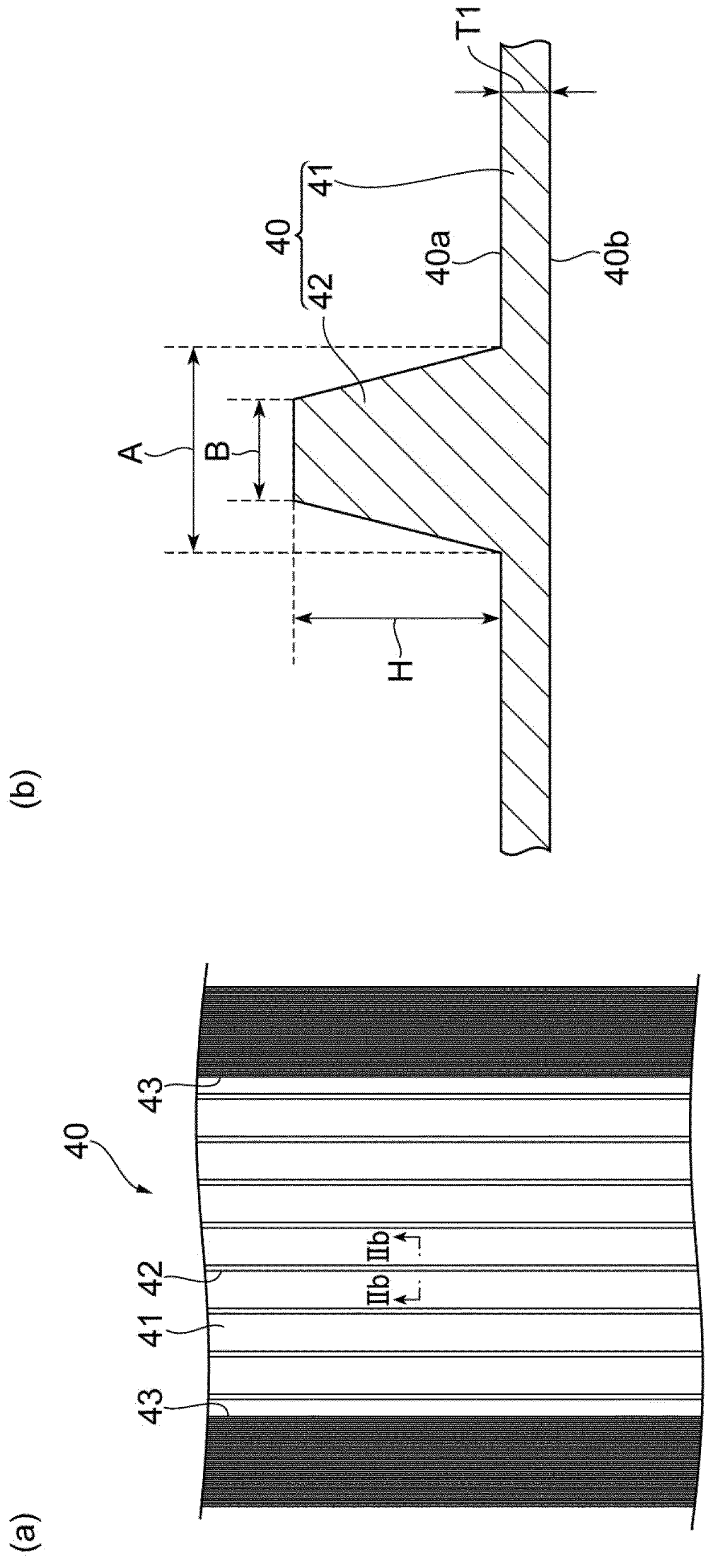

*Fig.3*

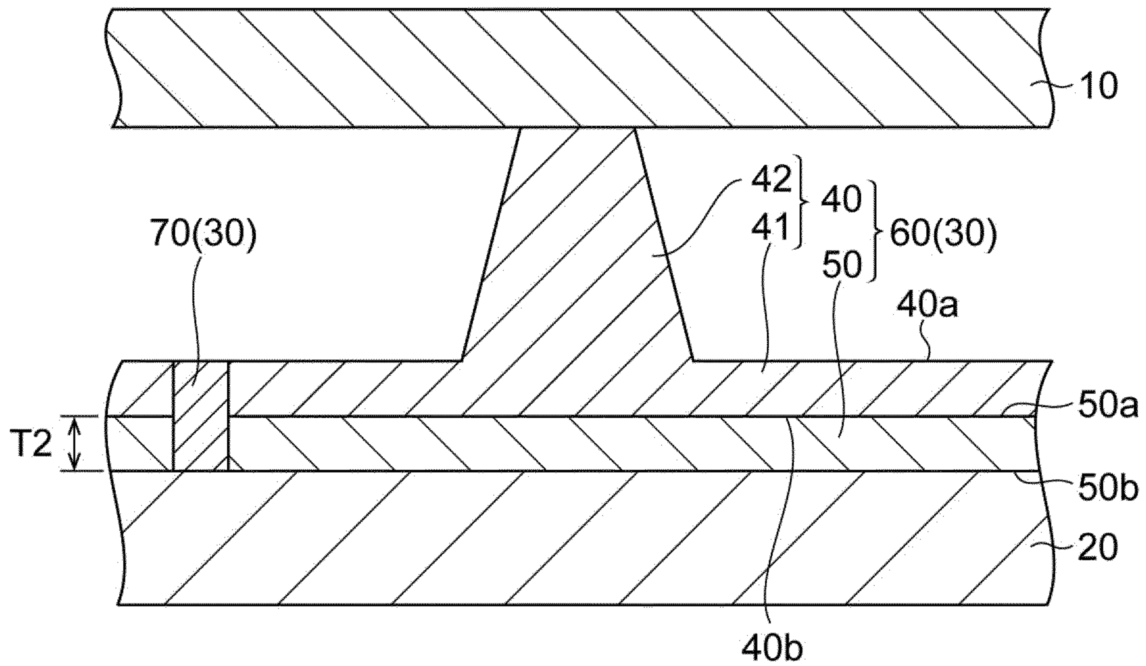

Fig.4

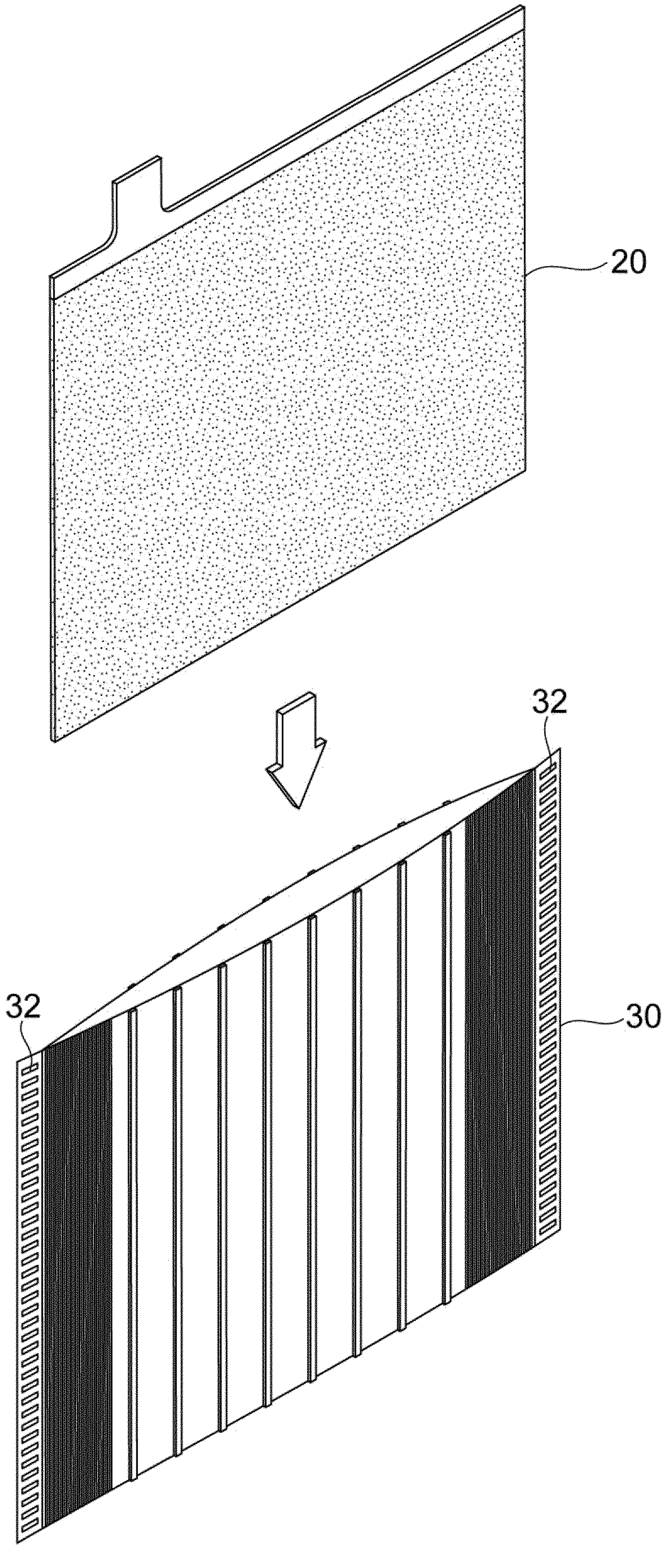

**INTERNATIONAL SEARCH REPORT**

International application No.
PCT/JP2016/062915

A. CLASSIFICATION OF SUBJECT MATTER
*H01M2/16*(2006.01)i, *H01M2/18*(2006.01)i, *H01M10/12*(2006.01)i

According to International Patent Classification (IPC) or to both national classification and IPC

B. FIELDS SEARCHED

Minimum documentation searched (classification system followed by classification symbols)
H01M2/16, H01M2/18, H01M10/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 4-206457 A (Matsushita Electric Industrial Co., Ltd.), 28 July 1992 (28.07.1992), claims; fig. 1 (Family: none) | 1-6,8,12-15, 19<br>7,9-11,16-18 |
| X<br>Y | JP 60-157157 A (Hagen Batterie AG), 17 August 1985 (17.08.1985), claim 1; drawings & US 4657799 A claim 1; fig. 1 & DE 3335547 C1 & AT 288084 A | 1-6,8,12-15, 19<br>7,9-11,16-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 July 2016 (15.07.16) | 26 July 2016 (26.07.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2016/062915

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 4-171656 A (Matsushita Electric Industrial Co., Ltd.), 18 June 1992 (18.06.1992), claims; fig. 1 (Family: none) | 1-6,8,12-15, 19<br>7,9-11,16-18 |
| X<br>Y | JP 2014-207161 A (Panasonic Corp.), 30 October 2014 (30.10.2014), claim 1; table 1 (Family: none) | 15,19<br>16-18 |
| X<br>Y | JP 2013-206571 A (Nippon Sheet Glass Co., Ltd.), 07 October 2013 (07.10.2013), claim 1 (Family: none) | 15,19<br>16-18 |
| Y | JP 10-040896 A (Matsushita Electric Industrial Co., Ltd.), 13 February 1998 (13.02.1998), claim 1 & US 2003/0049525 A1 claim 1 & EP 821422 A2 & DE 69706783 T2 | 7,9,16 |
| Y | JP 2000-173575 A (Matsushita Electric Industrial Co., Ltd.), 23 June 2000 (23.06.2000), claim 1 & US 6475665 B1 claim 1 & EP 994518 A1 & DE 69900175 T2 & KR 10-2000-0023057 A | 10,11,17,18 |

Form PCT/ISA/210 (continuation of second sheet) (January 2015)

**INTERNATIONAL SEARCH REPORT**

International application No.
PCT/JP2016/062915

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The inventions of claims 1-14 and claim 19 referring to claim 1 have no special technical feature, since these inventions are relevant to inventions which do not have novelty or comprise addition of a design matter onto the conventional technique.

The inventions of claims 15-18 and claim 19 which does not refer to claim 1 have no special technical feature, since these inventions are relevant to inventions which do not have novelty or comprise addition of a design matter onto the conventional technique.

(Continued to extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.
PCT/JP2016/062915

Continuation of Box No.III of continuation of first sheet(2)

There is no common or corresponding special technical feature between the above-said both inventions.

Consequently, this international application involves the following two inventions.

Invention 1: the inventions of claims 1-14 and claim 19 referring to claim 1

Invention 2: the inventions of claims 15-18 and claim 19 which does not refer to claim 1

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5500315 B
- JP 2002260714 A